# EUROPEAN PATENT SPECIFICATION

(11) **EP 0 389 841 B1**
(45) Date of publication and mention of the grant of the patent: **08.09.1993**
(21) Application number: 90104442.0
(22) Date of filing: 08.03.1990
(51) Int. Cl.: F16L 5/00, F16L 41/08, F16L 13/02, B65D 90/00, B65D 90/08

(54) **Tank connector construction and method of fabrication**
Tankanschlussteilkonstruktion und Methode zur Herstellung
Construction à pièce de raccordement pour réservoir et méthode de fabrication

(30) Priority: 29.03.1989 US 330118
(43) Date of publication of application: 03.10.1990
(73) Proprietor: STATE INDUSTRIES, INC., Ashland City, TN 37015-1296 (US)
(72) Inventor: Vago, Otto Z., Burns, Tennessee 37029 (US); Faber, Rolf E., Clarksville, Tennessee 37043 (US)
(74) Representative: Grünecker, Kinkeldey, Stockmair & Schwanhäusser Anwaltssozietät

(56) References cited:
- CH-A- 664 431
- DE-A- 3 446 360
- GB-A- 2 066 400
- US-A- 4 682 797

## Description

The present invention relates to a tank connector construction and a method of fabricating a tank having this connector construction mounted therein.

Connector constructions allowing the connection from the interior of a container to the exterior are well known in the art. Connectors usually include several parts, some of them may be of non-corrosive and non-metallic material to be attached to each other by embracing the wall of the container.

GB-A-2 066 400 describes a connector construction for connecting a tubular conduit to a wall of an enclosure molded of polymeric materials. The connector construction includes a hub member or a nut as a metal connector fitting means, the nut having an internal threaded body portion and a flange extending at one end of the nut towards the axis thereof for forming a groove-like recess. The connector construction further includes a metallic tubular insert as a sleeve member means. The sleeve member extends through the entire thickness of the wall and has a flange at its one end for abutting a recess of the wall in order to provide a rotational stop for the insert. After the known connector construction has been assembled, and has been provisionally secured at the wall, the other end of the tubular insert not provided with the rotational stop is to be formed into a further flange which is seated in the groove-like recess of the nut in order to secure the members of the connector construction together and to the wall. A resilient sealing ring has to be provided for preventing leakage to the outside of the wall. The sealing ring is arranged in a groove in the outer surface of the wall distant to the opening. Thus, the known connector construction is not able to prevent contact between the contents of the enclosure and the outer surface of the wall, and is therefore not useful as a connector construction for a tank having a metallic outer shell and a non-corrosive and non-metallic lining. In addition, the known connector construction cannot be welded to the enclosure.

US-A-4 682 797 discloses a connector comprising a threaded sleeve of synthetic plastic material and a threaded tube. The tube has a groove and a seal member embedded in the groove. The connector is adapted to connect pipes to each other, or to connected armatures, valves or the like to the sleeve.

DE-A-34 46 360 discloses a connector construction for connecting a tube to a container. The connector includes a fitting element having a threaded body and a nut received on the threaded body for tightening the body to the container by including a seal.

CH-A-664 431 discloses a connector construction having a connecting part or a polymer material for connecting a metallic cock to a plastic tube within a wall.

It will therefore be appreciated that there has been a significant need for a tank connector construction for connecting the interior of a tank having an outer shell of a metal material and an inner shell of a non-corrosive, non-metallic material, to the exterior of this tank and for preventing the outer shell of the tank from contact with the contents of this tank.

It is a further object of the present invention to provide a method of manufacturing of the above-described tank.

The present invention fulfills this need by the tank connector constructions of claims 1, 5 and 7, and by the method of claim 15, wherein claim 5 includes the embodiment of Figures 43 to 52, claim 7 includes the embodiment of Figures 95 to 105 and claim 1 includes the remaining embodiments.

Preferred developments of the above-defined tank connector constructions together with a tank containing these tank connector constructions are described in the dependent claims.
Figure 1 is a sectional view of a threaded connector fitting made in accordance with one embodiment of the present invention;
Figure 1a is a plan view of the fitting shown in Figure 1;
Figure 2 is a sectional view of a sleeve member made in accordance with one embodiment of the present invention;
Figure 2a is a plan view of the sleeve member shown in Figure 2;
Figure 3 is a sectional view of an assembly of the parts shown in Figures 1 and 2;
Figure 4 is a sectional view of the assembly of Figure 3 positioned for welding to an outer shell of tank at an opening in the wall;
Figure 5 is a sectional view of the Figure 4 assembly after it has been welded to the outer shell tank wall;
Figure 6 is a side elevation view of a plug made from material having high thermal conductivity used in the present invention;
Figure 6a is a plan view of the plug shown in Figure 6;
Figure 7 is a side elevation view of a cap made from material having low thermal conductivity value, and no bonding characteristics to polymer material used for the inner tank in the present invention;
Figure 7a is a plan view of the heat plug cap shown in Figure 7;
Figure 8 is a side elevation view of an assembly of the parts shown in Figures 6 and 7;
Figure 9 is a sectional view of the assembly shown in Figure 8 after it is installed in the assembly shown in Figure 5;
Figure 10 is a sectional view of the connector assembly shown in Figure 9 after an inner tank shell has been cast in place inside of the outer shell of the tank;
Figure 11 is a sectional view of the completed tank connector construction after the plug and cap assembly of Figure 8 has been removed;
Figure 12 is a sectional view of a threaded connector fitting made in accordance with a second embodiment of the present invention;
Figure 12a is a plan view of the fitting shown in Figure 12;
Figure 13 is a sectional view of a sleeve member made in accordance with a second embodiment of the present invention;
Figure 13a is a plan view of the sleeve member shown in Figure 13;
Figure 14 is a sectional view of an assembly of the parts shown in Figures 12 and 13;
Figure 15 is a sectional view of the assembly of Figure 14 positioned for welding to outer shell of the tank at an opening in the wall;
Figure 16 is a sectional view of the Figure 15 assembly after it has been welded to the outer shell of the tank wall;
Figure 17 is a side elevation view of the plug used in the present invention;
Figure 17a is a plan view of the plug shown in Figure 17;
Figure 18 is a side elevation view of the cap used in the present invention;
Figure 18a is a plan view of the cap shown in Figure 18;
Figure 19 is a side elevation view showing the assembly of the parts shown in Figures 17 and 18;
Figure 20 is a sectional view of the assembly shown in Figure 16 with the plug and cap assembly shown in Figure 19 installed therein;
Figure 21 is a sectional view of the connector assembly shown in Figure 20 after an inner shell has been cast in place inside of the outer shell of the tank;
Figure 22 is a sectional view of the completed tank connector construction after the plug and cap assembly of Figure 19 has been removed;
Figure 23 is a sectional view of a threaded connector fitting made in accordance with a third embodiment of the present invention;
Figure 23a is a plan view of the fitting shown in Figure 23;
Figure 24 is a sectional view of a sleeve member made in accordance with a third embodiment of the present invention;
Figure 24a is a plan view of the sleeve member shown in Figure 24;
Figure 25 is a sectional view of an assembly of the parts shown in Figures 23 and 24;
Figure 26 is a sectional view of the assembly of Figure 25 positioned for welding to the outer shell of the tank at an opening in the wall;
Figure 27 is a sectional view of the Figure 26 assembly after it has been welded to the outer shell of the tank wall;
Figure 28 is a sectional view of a cap member used in the present invention;
Figure 28a is a plan view of the cap member shown in Figure 28;
Figure 29 is a sectional view of the assembly shown in Figure 27 with the cap member of Figure 28 installed therein;
Figure 30 is a sectional view of the assembly shown in Figure 29 after an inner shell has been cast in place inside of the outer shell of the tank;
Figure 31 is a sectional view of the completed tank connector construction after the cap member of Figure 28 has been removed;
Figure 32 is a sectional view of a threaded connector fitting made in accordance with a fourth embodiment of the present invention;
Figure 32a is a plan view of the fitting shown in Figure 32;
Figure 33 is a sectional view of a sleeve member made in accordance with a fourth embodiment of the present invention;
Figure 33a is a plan view of the sleeve member shown in Figure 33;
Figure 34 is a sectional view of an assembly of the parts shown in Figures 32 and 33;
Figure 35 is a sectional view of the assembly of Figure 34 positioned for welding to outer shell of the tank wall at an opening in the wall;
Figure 36 is a sectional view of the Figure 35 assembly after it has been welded to the outer shell of the tank wall;
Figure 37 is a side elevation view of the plug used in the present invention;
Figure 37a is a plan view of the plug shown in Figure 37;
Figure 38 is a side elevation view of the cap for use in the present invention;
Figure 38a is a plan view of the cap shown in Figure 38;
Figure 39 is a side elevation view of the assembly of the plug of Figure 37 with the cap of Figure 38;
Figure 40 is a sectional view of the assembly shown in Figure 36 with the plug and cap assembly of Figure 39 installed therein;
Figure 41 is a sectional view of the connector assembly shown in Figure 40 after an inner shell has been cast in place inside of the outer shell of the tank;
Figure 42 is a sectional view of the completed tank connector construction after the plug and cap assembly have been removed;
Figure 43 is a sectional view of a threaded connector fitting made in accordance with a fifth embodiment of the present invention;
Figure 43a is a plan view of the fitting shown in Figure 43;
Figure 44 is a sectional view of a tube member made from material having high thermal conductivity material in accordance with a fifth embodiment of the present invention;
Figure 44a is a plan view of the tube member shown in Figure 44;
Figure 45 is a sectional view of a retaining ring for use in a fifth embodiment of the present invention;
Figure 45a is a plan view of the retaining ring shown in Figure 45;
Figure 46 is a sectional view of a cup member for use in a fifth embodiment of the present invention;
Figure 46a is a plan view of the locating cup member shown in Figure 46;
Figure 47 is a sectional view of an assembly of the connector fitting shown in Figure 43 with the tube member shown in Figure 44;
Figure 48 is a sectional view of the assembly shown in Figure 47 with the retaining ring of Figure 45 installed into the assembly;
Figure 49 is a sectional view of the assembly shown in Figure 48 with the cup member of Figure 46 installed in the assembly;
Figure 50 is a sectional view of the Figure 49 assembly positioned for welding to outer shell of the tank at an opening in the wall;
Figure 51 is a sectional view of the Figure 50 assembly after it has been welded to the tank wall;
Figure 51a is a side elevation view of the plug;
Figure 51b is a side elevation of the cap;
Figure 51c is a side elevation view of the assembly of the Figure 51a plug and the Figure 51b cap;
Figure 51d is a side elevation view of the Figure 51 assembly with the cup of Figure 46 removed and with the assembly of Figure 51c threaded therein;
Figure 51e is a sectional view of the Figure 51d assembly after an inner shell has been cast in place inside of the outer shell of the tank;
Figure 52 is a sectional view of the completed tank connector construction after the plug assembly cup of Figure 51c has been removed;
Figure 53 is a sectional view of a threaded connector fitting made in accordance with a sixth embodiment of the present invention;
Figure 53a is a plan view of the fitting shown in Figure 53;
Figure 54 is a sectional view of a sleeve member made in accordance with a sixth embodiment of the present invention;
Figure 54a is a plan view of the sleeve member shown in Figure 54;
Figure 55 is a sectional view showing the assembly of the parts shown in Figures 53 and 54;
Figure 56 is a side elevation view of a locator used in the present invention;
Figure 56a is a plan view of the locator shown in Figure 56;
Figure 57 is a sectional view of the assembly shown in Figure 55 with the locating plug of Figure 56 installed therein;
Figure 58 is a sectional view of the assembly shown in Figure 57 positioned for welding to the outer shell of the tank wall at an opening in the wall;
Figure 59 is a sectional view of the Figure 58 assembly after it has been welded to the tank wall;
Figure 60 is a sectional view of plug used in the present invention;
Figure 60a is a plan view of the plug shown in Figure 60;
Figure 61 is a sectional view of the assembly shown in Figure 59 with the plug of Figure 60 installed therein;
Figure 62 is a sectional view of the assembly shown in Figure 61 after an inner shell has been cast in place inside of the outer shell of the tank;
Figure 63 is a sectional view of the completed tank connector construction after the plug of Figure 60 has been removed;
Figure 64 is a sectional view of a threaded connector fitting made in accordance with a sixth embodiment with the present invention;
Figure 64a is a plan view of the fitting shown in Figure 64;
Figure 65 is a sectional view of a sleeve member made in accordance with a sixth embodiment of the present invention;
Figure 65a is a plan view of the sleeve member shown in Figure 65;
Figure 66 is a sectional view of the assembly of the parts shown in Figures 64 and 65;
Figure 67 is a side elevation view of the cap for use in the present invention;
Figure 67a is a plan view of the cap shown in Figure 67;
Figure 68 is an assembly of the cap of Figure 67 and the assembly of Figure 66;
Figure 69 is a sectional view of the assembly shown in Figure 68 positioned for welding to outer shell of the tank at an opening in the wall;
Figure 70 is a sectional view of the Figure 69 assembly after it has been welded to the outer shell of the tank wall;
Figure 71 is a sectional view of the Figure 70 assembly after an inner shell has been cast in place inside of the outer shell of the tank;
Figure 72 is a sectional view of the completed tank connector construction after the cap of Figure 67 has been removed;
Figure 73 is a cross sectional view of a threaded connector fitting made in accordance with an eighth embodiment of the present invention;
Figure 73a is a plan view of the fitting shown in Figure 73;
Figure 74 is a sectional view of a sleeve member made in accordance with an eighth embodiment of the present invention;
Figure 74a is a plan view of the sleeve member shown in Figure 74;
Figure 75 is a side elevation view of the plug for use in the present invention;
Figure 75a is a plan view of the plug shown in Figure 75;
Figure 76 is a side elevation view of the cap for use in the present invention;
Figure 76a is a plan view of the cap shown in Figure 76;
Figure 77 is a sectional view of an assembly of the parts shown in Figures 73 and 74;
Figure 77a is a sectional view of the Figure 77 assembly positioned for welding to the outer shell of the tank wall at an opening in the wall;
Figure 77b is a sectional view of the Figure 77a assembly after it has been welded to the outer shell of the tank wall;
Figure 78 is a side elevation view of the assembly of the parts shown in Figures 75 and 76;
Figure 79 is a sectional view of an assembly of the plug assembly shown in Figure 78 with the assembly shown in Figure 77b;
Figure 80 is a sectional view of the assembly shown in Figure 79 after an inner shell has been cast in place inside of the outer shell of the tank;
Figure 81 is a sectional view of the completed tank connector construction after the plug assembly of Figure 78 has been removed;
Figure 95 is a sectional view of a threaded connector fitting made in accordance with a ninth embodiment of the present invention;
Figure 95a is a plan view of the fitting shown in Figure 95;
Figure 96 is a sectional view of a sleeve member made in accordance with a ninth embodiment of the present invention;
Figure 96a is a plan view of the sleeve member shown in Figure 96;
Figure 97 is a sectional view of an assembly of the parts shown in Figures 95 and 96;
Figure 98 is a sectional view of the assembly shown in Figure 97 positioned for welding to the outer shell of the tank at an opening in the wall;
Figure 99 is a sectional view of the assembly shown in Figure 98 after it has been welded to the outer shell of the tank wall;
Figure 100 is a side elevation view of the plug for use in the present invention;
Figure 101 is a side elevation view of the cap for use in the present invention;
Figure 101a is a plan view of the cap shown in Figure 101;
Figure 102 is a side elevation view of an assembly of the parts shown in Figures 100 and 101;
Figure 103 is a sectional view of an assembly of the parts shown in Figures 99 and 102;
Figure 104 is a sectional view of the assembly shown in Figure 103 after an inner shell has been cast in place inside of the outer shell of the tank;
Figure 105 is a sectional view of the completed tank connector construction after the plug assembly of Figure 102 has been removed;
Figure 106 is a sectional view of a threaded connector fitting made in accordance with a tenth embodiment of the present invention;
Figure 106a is a plan view of the fitting shown in Figure 106;
Figure 107 is a sectional view of a sleeve member made in accordance with a tenth embodiment of the present invention;
Figure 107a is a plan view of the sleeve member shown in Figure 107;
Figure 108 is a sectional view showing the assembly of the Figure 107 sleeve at an opening in the outer shell of the tank;
Figure 108a is a plan view of the assembly shown in Figure 108;
Figure 109 is a sectional view of the assembly of the parts shown in Figures 106 and 108 such parts being positioned for welding to the outer shell of the tank wall at an opening in the wall;
Figure 110 is a sectional view of the assembly shown in Figure 109 after it has been welded to the outer shell of the tank wall;
Figure 111 is a side elevation view of the plug for use in the present invention;
Figure 112 is a side elevation view of the cap for use in the present invention;
Figure 112a is a plan view of the cap shown in Figure 112;
Figure 113 is a side elevation view of an assembly of the parts shown in Figures 111 and 112;
Figure 114 is a sectional view of the assembly of the parts shown in Figures 110 and 113;
Figure 115 is a sectional view of the Figure 114 assembly after an inner shell has been cast in place inside of the outer shell of the tank;
Figure 116 is a sectional view of the completed tank connector construction after the plug assembly of Figure 113 has been removed;
Figure 117 is a sectional view of a threaded connector fitting made in accordance with an eleventh embodiment of the present invention;
Figure 117a is a plan view of a fitting shown in Figure 117;
Figure 118 is a sectional view of the cup member made in accordance with an eleventh embodiment of the present invention;
Figure 119 is a sectional view of the cup of Figure 118 embedded in a polymer body;
Figure 120 is a sectional view showing an assembly of the parts shown in Figures 117 and 119 after the non-metallic and non-corrosive material applied thereto;
Figure 121 is a sectional view of the Figure 120 assembly positioned for welding to the outer shell of the tank at an opening in the wall;
Figure 122 is a sectional view of the Figure 121 assembly after it has been welded to the outer shell of the tank wall;
Figure 123 is a side elevation view of the plug for use in the present invention;
Figure 124 is a sectional view of an assembly of the parts shown in Figures 122 and 123;
Figure 125 is a sectional view of the Figure 124 assembly after an inner shell has been cast in place inside of the outer shell of the tank;
Figure 126 is a sectional view of the completed tank connector construction after the cap of Figure 123 has been removed;
Figure 127 is a side elevation view of a plug made from high thermal conductivity material;
Figure 128 is a side elevation view of a cap adapted for assembly with the Figure 127 plug;
Figure 129 is a view of the Figure 128 cap with a fiberglass plug installed therein; and
Figure 130 is a view of the assembly of the Figure 127 plug with the Figure 129 cap.

As previously indicated, the connector construction of the present invention is specifically designed for use in a tank comprised of an outer shell of metal material and an inner shell of non-corrosive and non-metallic polymer material.

The tank connection construction of the present invention can best be understood by describing the step-by-step fabrication of each of the various embodiments of the construction.

### First Embodiment

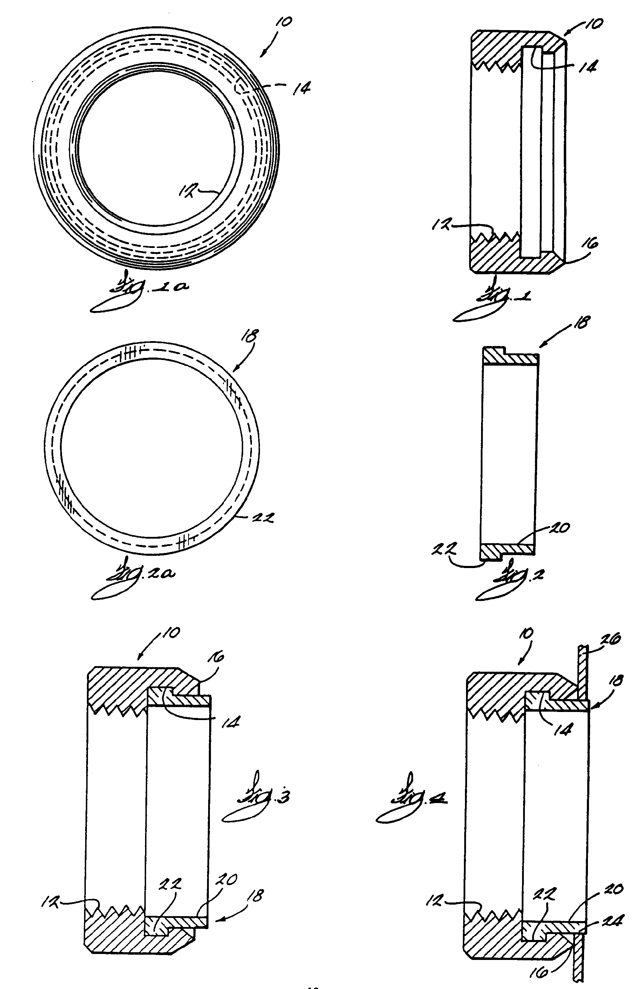

Figures 1-11 show a first embodiment of the present invention. This embodiment is adapted for connection of a temperature and pressure relief valve, a thermostat and a drain valve to a water heater tank.

Figures 1 and 1a show a threaded connector fitting 10 having an internal threaded body portion 12, an internal groove 14 and a weld projection portion 16 formed on the end thereof. Fitting 10 is preferably made of metal.

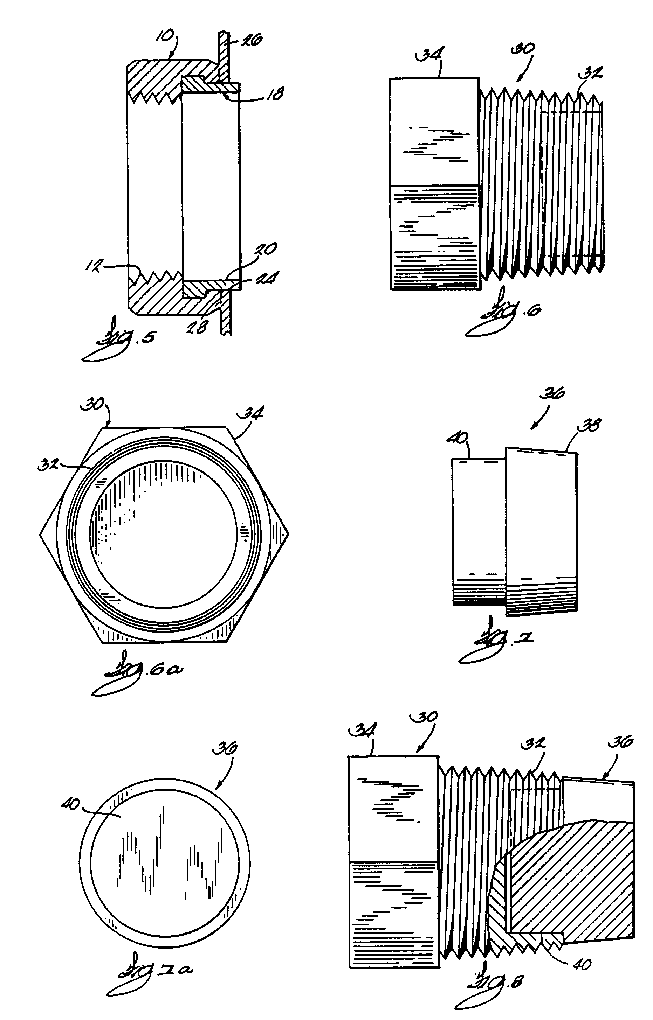

Figures 2 and 2a show a sleeve member 18 having a cylindrical body portion 20 and a radially extending flange portion 22. In the preferred embodiment sleeve 18 is made of a polymer material.

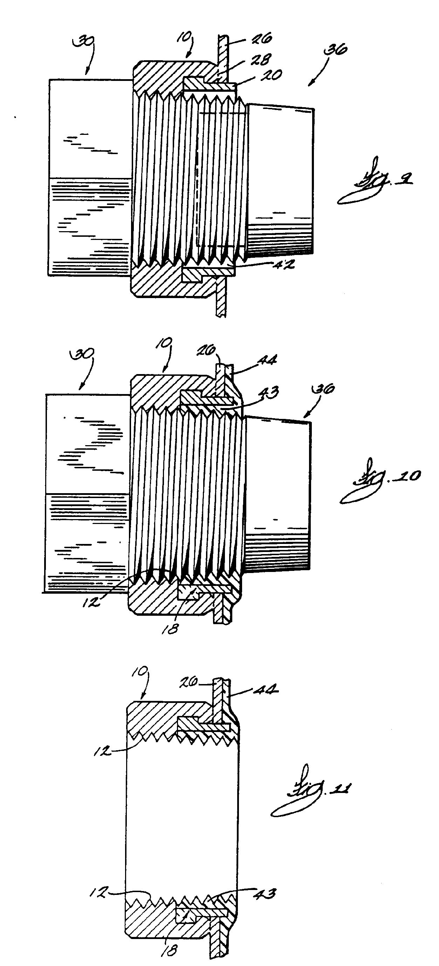

Figure 3 shows an assembly of fitting 10 and sleeve 18 with flange 22 of the sleeve seated in the groove 14 of the fitting.

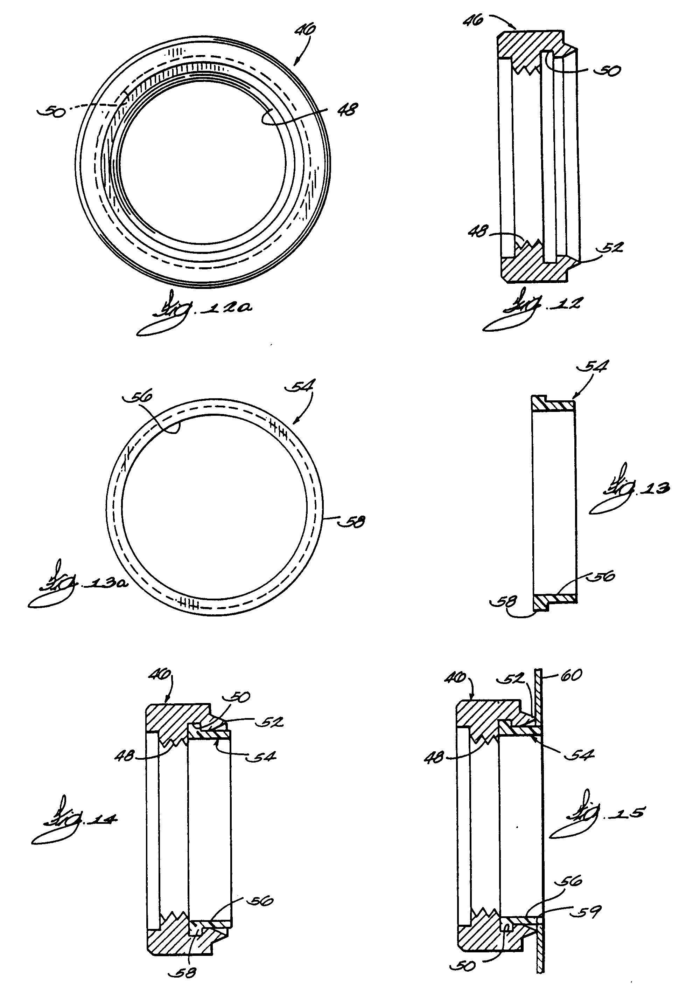

As shown in Figure 4, the assembly of Figure 3 is positioned in an opening 24 of an outer metal shell 26 of a tank with the weld projection 16 on fitting 10 in contact with the tank shell 26. The body 20 of the sleeve 18 serves to center the Figure 3 assembly in the tank shell opening 24.

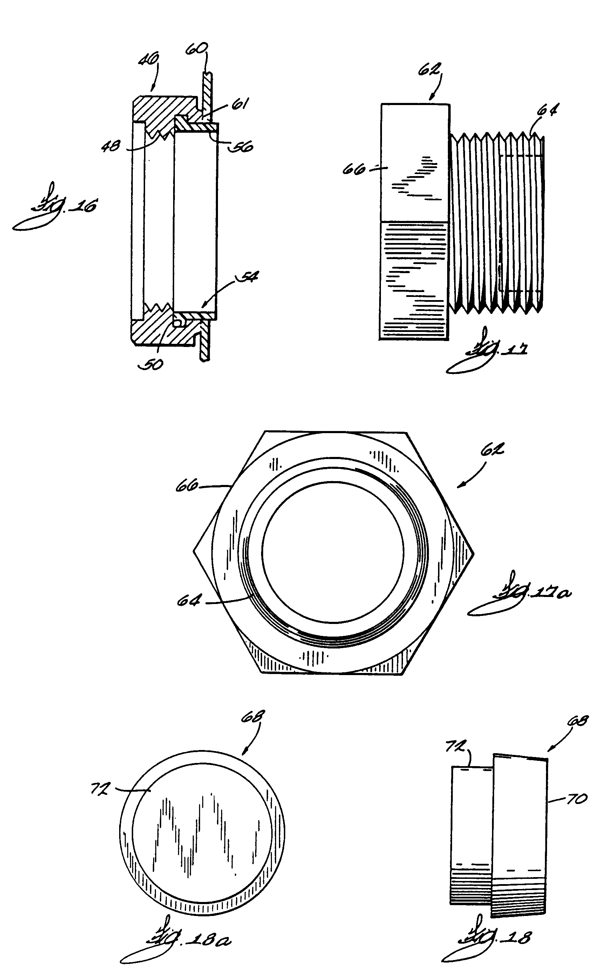

The next step is to weld the fitting 10 to the tank shell 26 preferably by a resistance welding procedure. The resulting structure is shown in Figure 5. As there shown, weld projection 16 on the fitting 10 will be deformed and fused to shell 26 as indicated by reference numeral 28.

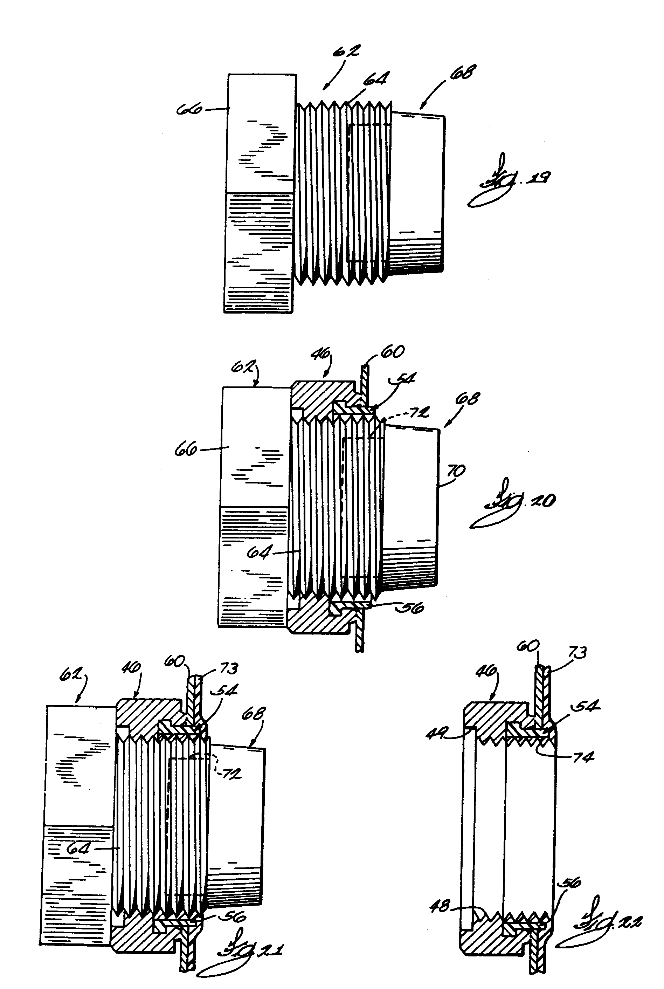

Figures 6 and 6a show a plug member 30 (preferably material having high thermal conductivity rating) having a threaded portion 32 and a head portion 34.

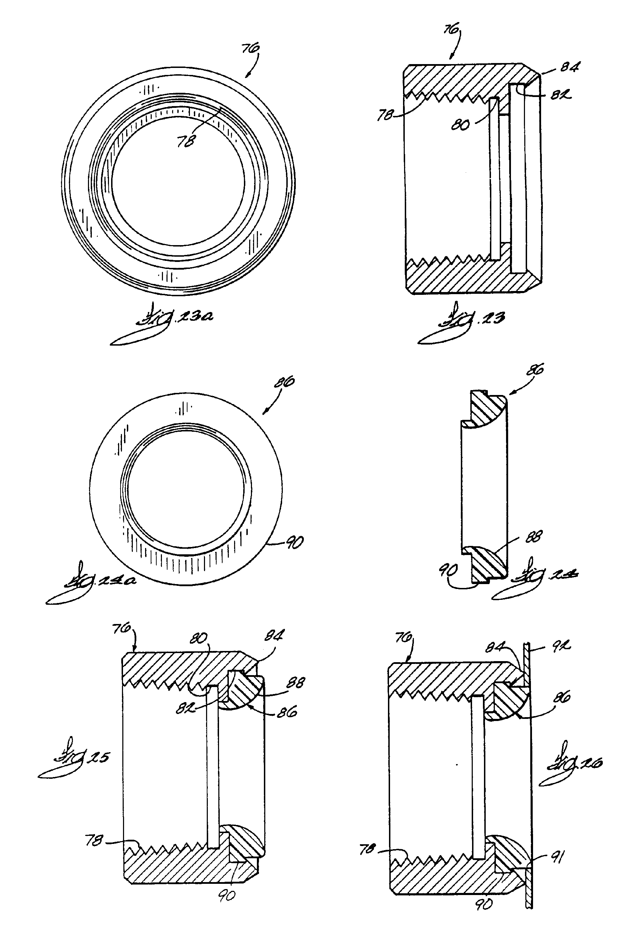

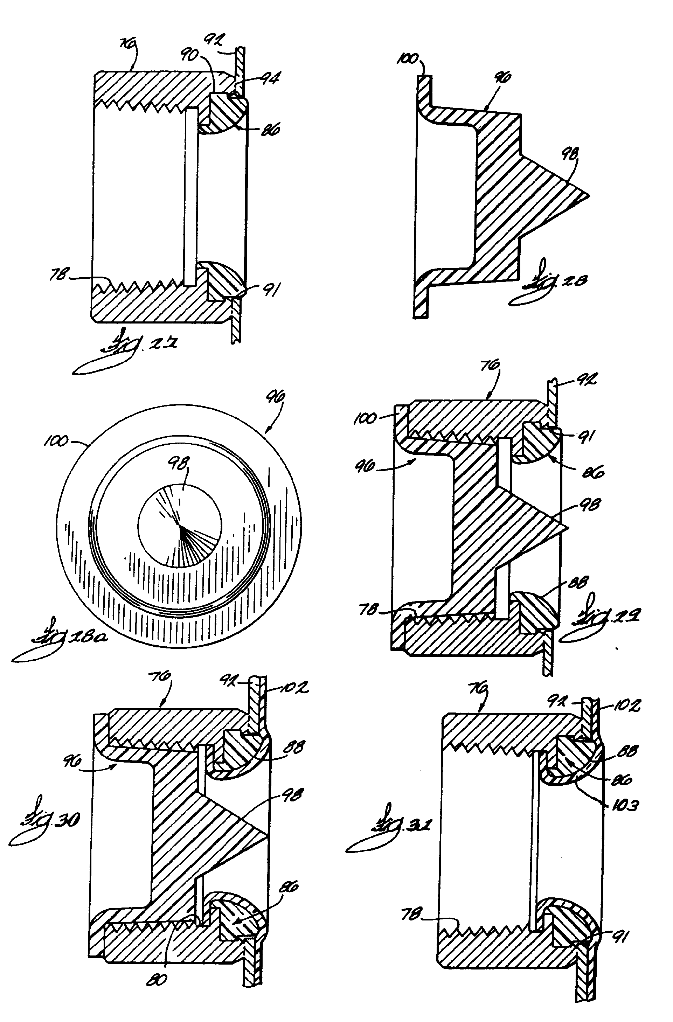

Figures 7 and 7a show the cap 36 (made from material having low thermal conductivity) having a head portion 38 and a body portion 40. Plug 30 and cap 36 are assembled as shown in Figure 8 with the body 40 of cap 36 pressed into an opening in the threaded portion 32 of plug 30.

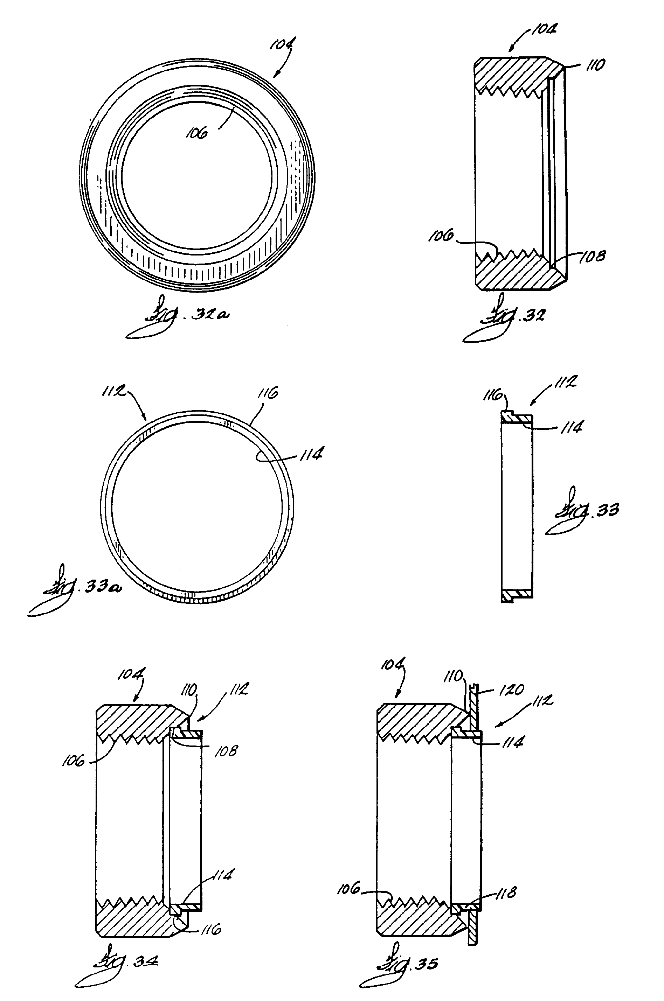

The next step is to thread the Figure 8 assembly into the connector assembly of Figure 5 as shown in Figure 9. With the parts so assembled there will be a space 42 between the body portion 20 of sleeve 18 and the threaded exterior of plug 30.

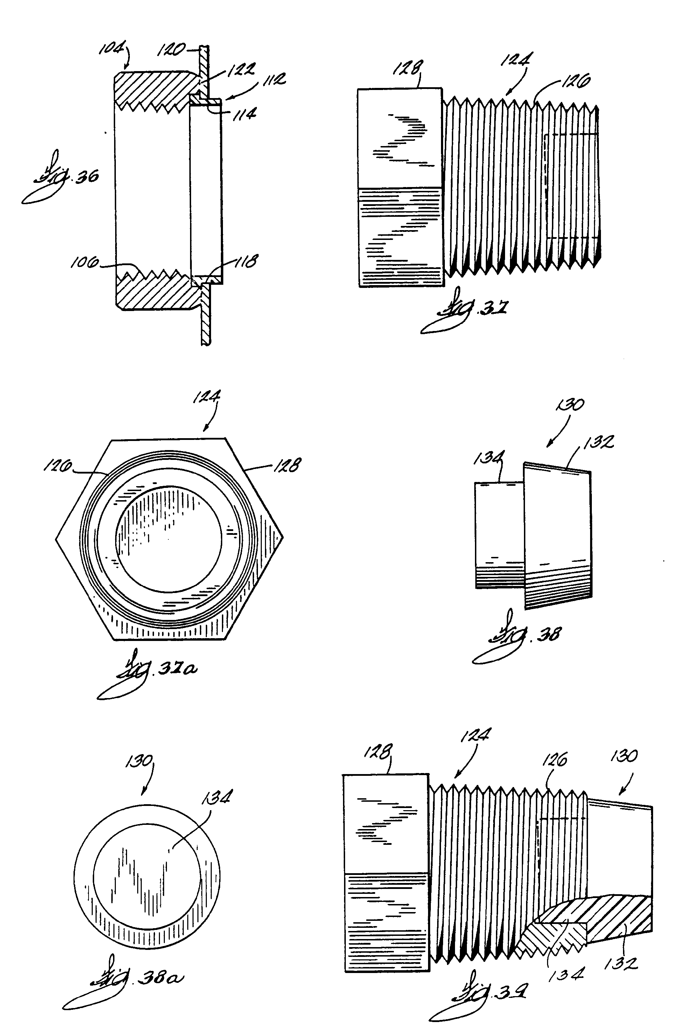

The next step is to form an inner shell 44 inside the outer shell 26 of the tank with the plug and cap installed as shown in Figure 9. Such inner shell 44 may be formed by a rotational casting procedure. In such a procedure the outer shell 26 is charged with a polymer material and then subjected to a rotational casting movement while heat is applied to the outer shell 26. The polymer material will be distributed uniformly over the inner surface of outer shell 26 to form an inner shell 44. The resulting connection is shown in figure 10.

During the rotational casting step the plug and cap assembly serve to control the formation of the inner shell in the connector area. The sleeve and inner shell material will form to the shape of the exposed metal of plug 30 but will not adhere to the exposed cap 36 because of the low thermal conductive material used for making the cap. Therefore, the presence of the cap creates an opening in the inner shell of the tank required for proper communication between the contents inside of the tank and component(s) or system(s).

As best shown in Figure 10, the polymer material of inner shell 44 and material of sleeve member 18 will fill the space 42 between the body portion 20 of sleeve 18 and the threaded metal exterior of plug 30 to form a threaded portion 43 of the inner shell. The polymer material in space 42 will contact and become fused with the sleeve member 18. The threads of portion 43 form a continuation of the threads 12 in fitting 10. In the preferred embodiment the polymer material of sleeve member 18 and the inner shell 44 will be of substantially identical formulation. It will be further appreciated as shown in Figure 10 that during the formation of inner shell 44 the plug and cap member assembly will prevent the material of the inner shell from penetrating into the upper portion of fitting 10.

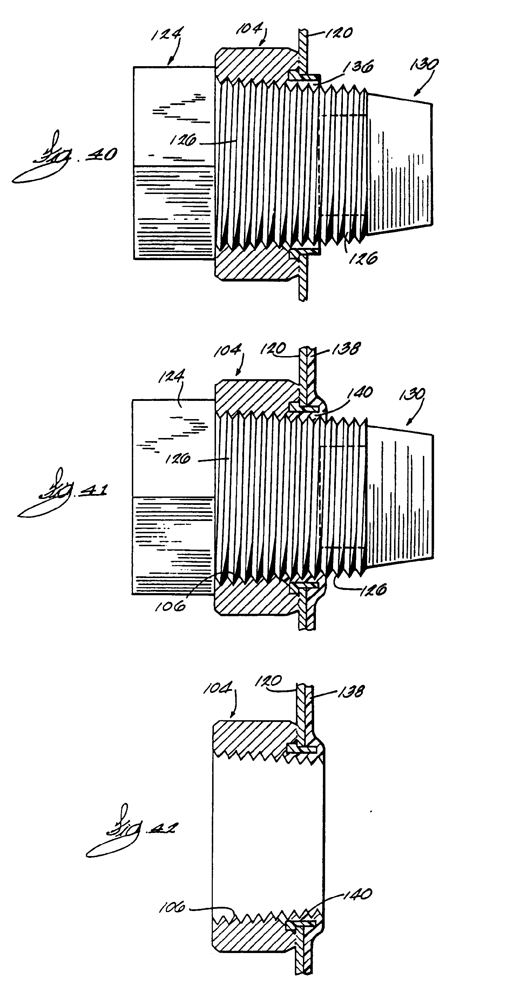

After shell 44 is formed as described above, the plug and cap assembly 30, 36 is removed. The resulting connector construction will be as shown in Figure 11. The resulting connector construction (Figure 11) will substantially prevent the contents of the tank (such as water) from coming in contact with the inner surface of the metal outer shell 26 and the inner surfaces of the metal fitting 10 when a suitable connector member (not shown) is threaded into the completed connector assembly of Figure 11.

### Second Embodiment

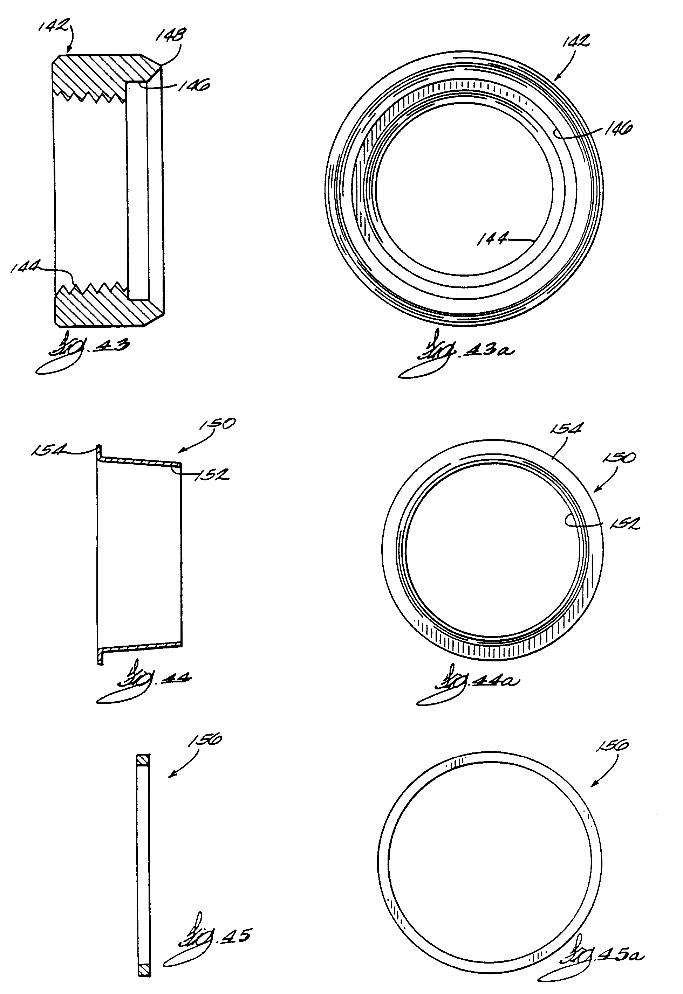

Figures 12-22 show a second embodiment of the present invention. This embodiment is particularly adapted for connection of an electric heating element to a tank of an electric water heater. Figures 12 and 12a show a threaded connector fitting 46 having an internal threaded body portion 48, an internal groove 50 and a weld projection portion 52. Fitting 46 is preferably made of metal.

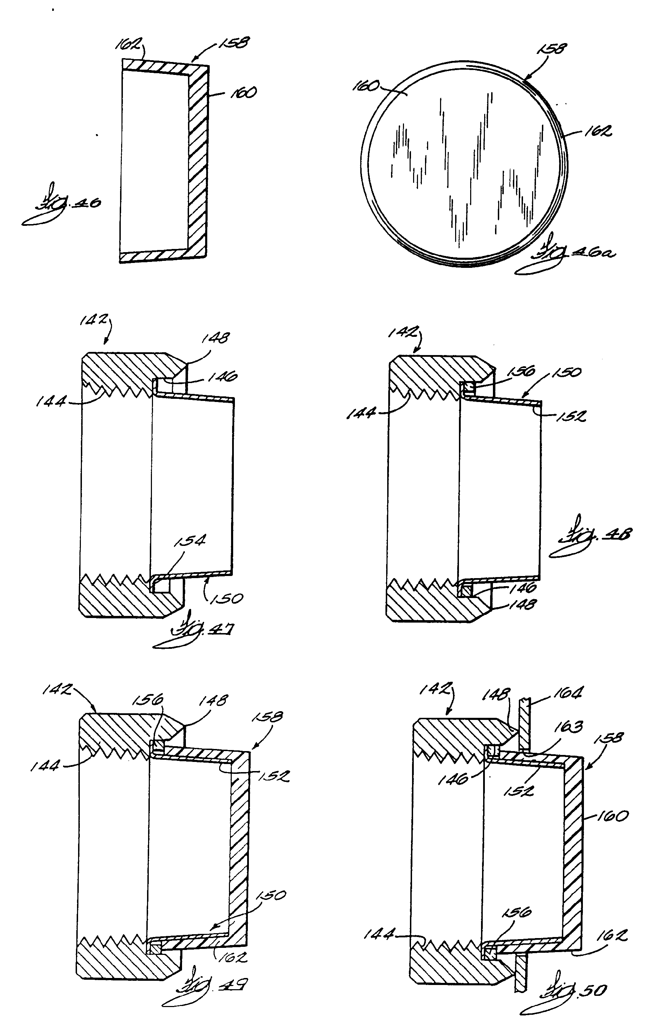

Figures 12 and 13a show a sleeve member 54 having a cylindrical body portion 56 and a radially extending flange portion 58. In the preferred embodiment sleeve 54 is made of a polymer material.

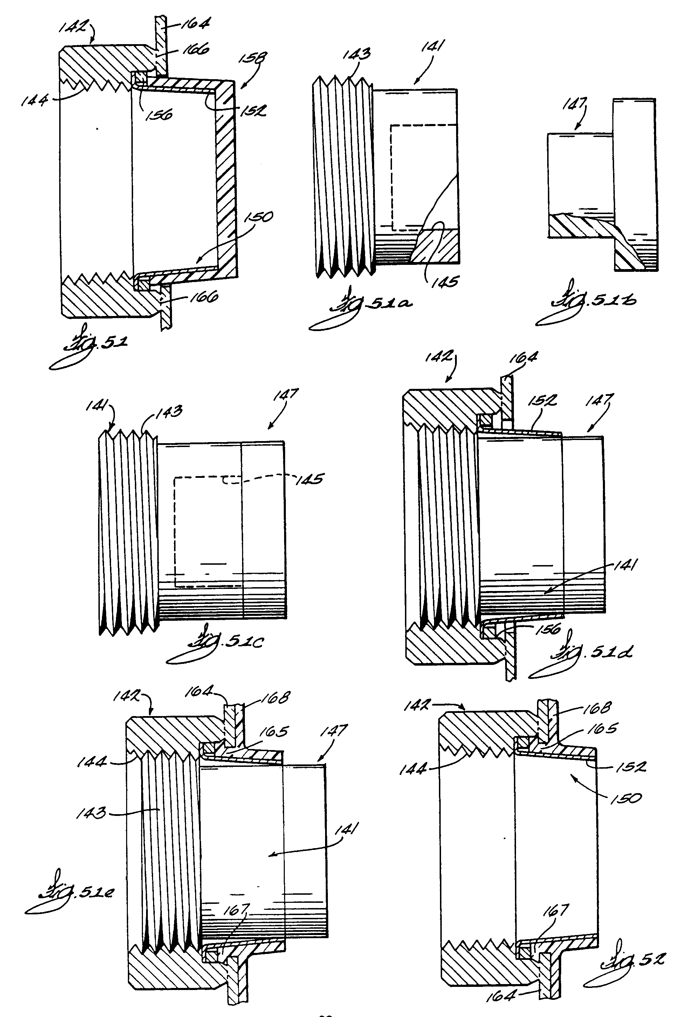

Figure 14 shows an assembly of fitting 46 and sleeve 54 with flange 58 of the sleeve seated in the groove 50 in the fitting.

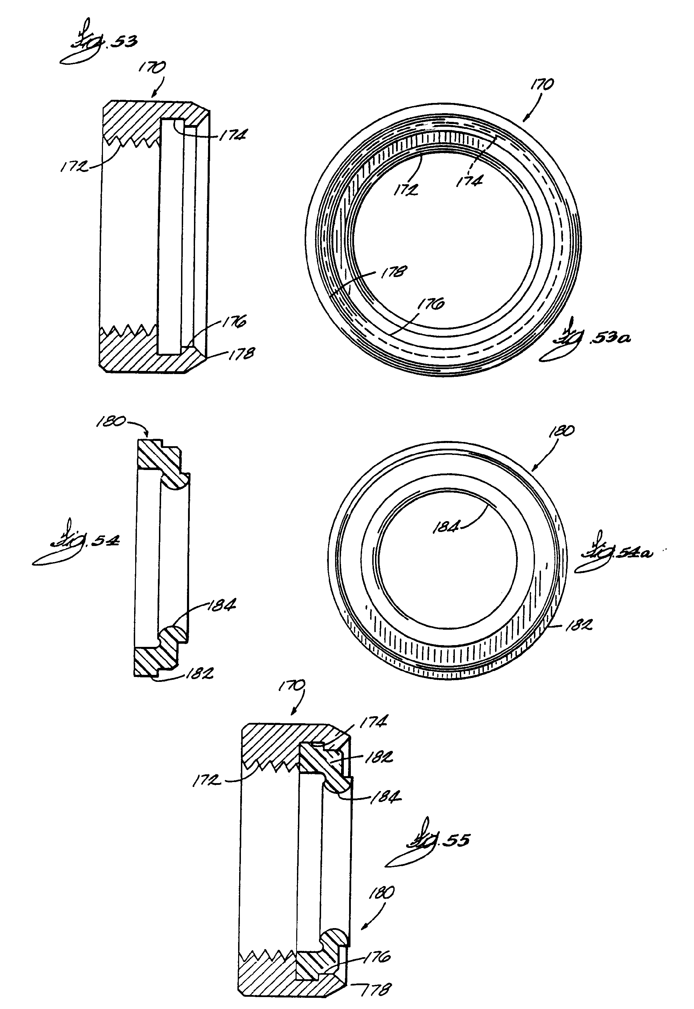

Figure 15 shows the assembly of Figure 14 is positioned in opening 59 of an outer metal shell 60 of a tank with the weld projection 52 on fitting 46 in contact with the outer metal shell 60 of the tank. The body 56 of the sleeve 54 serves to center the Figure 15 assembly in the outer metal shell 60 opening 59 of the tank.

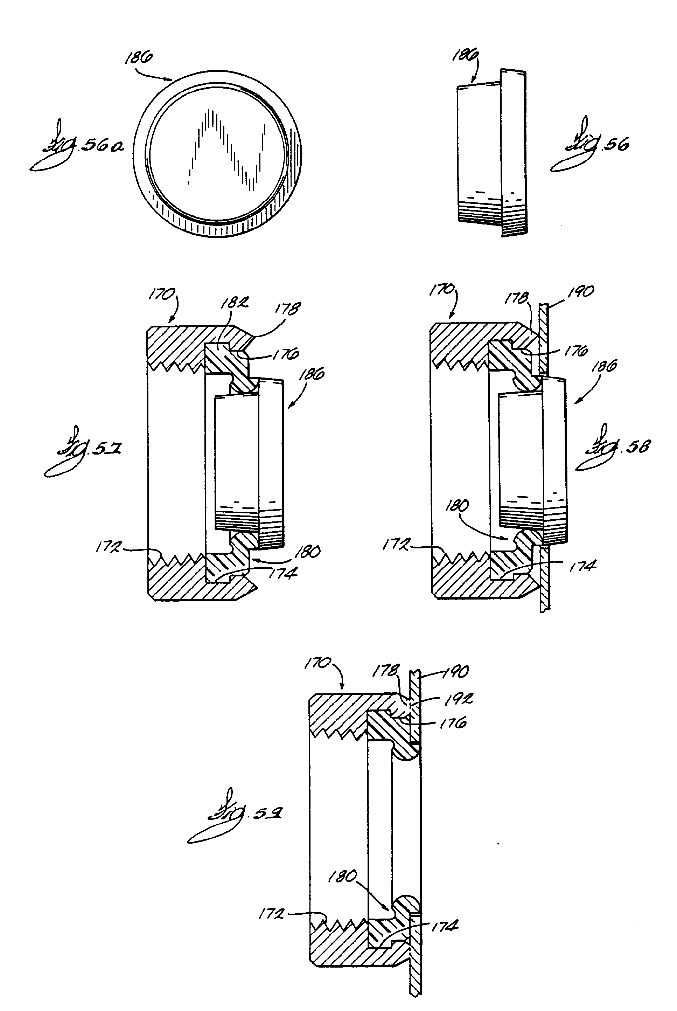

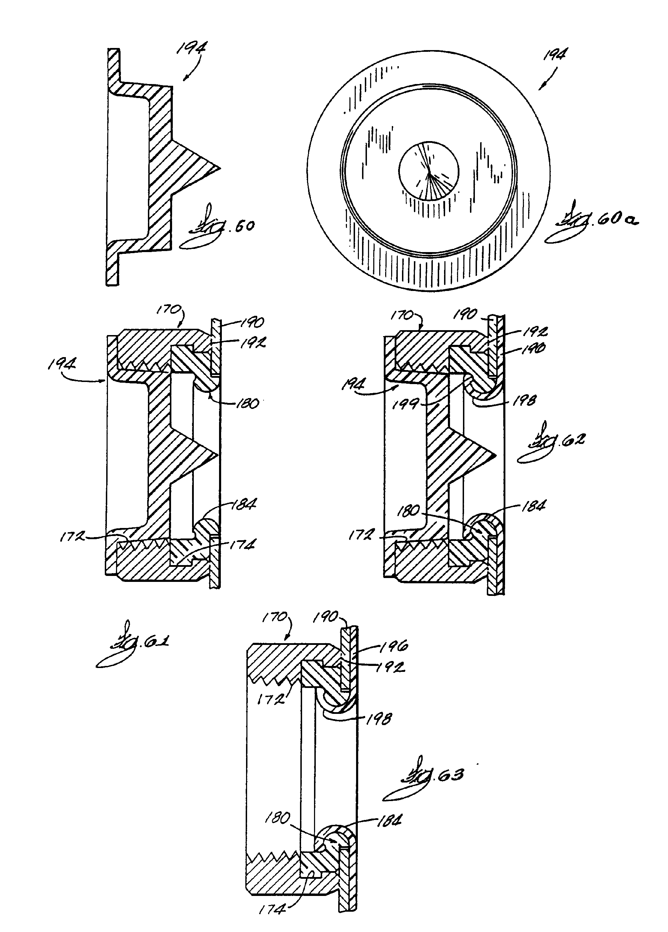

The next step is to weld the fitting 46 to outer metal shell 60 of the tank. This is accomplished preferably by a resistance welding procedure. The resulting structure is shown in Figure 16. As there shown, weld projection 52 on the fitting 46 will be deformed and fused to shell 60 as indicated by reference numeral 61. Figure 17 shows the plug member 62 (made from material having high thermal conductivity) and having a threaded portion 64 and a head portion 66.

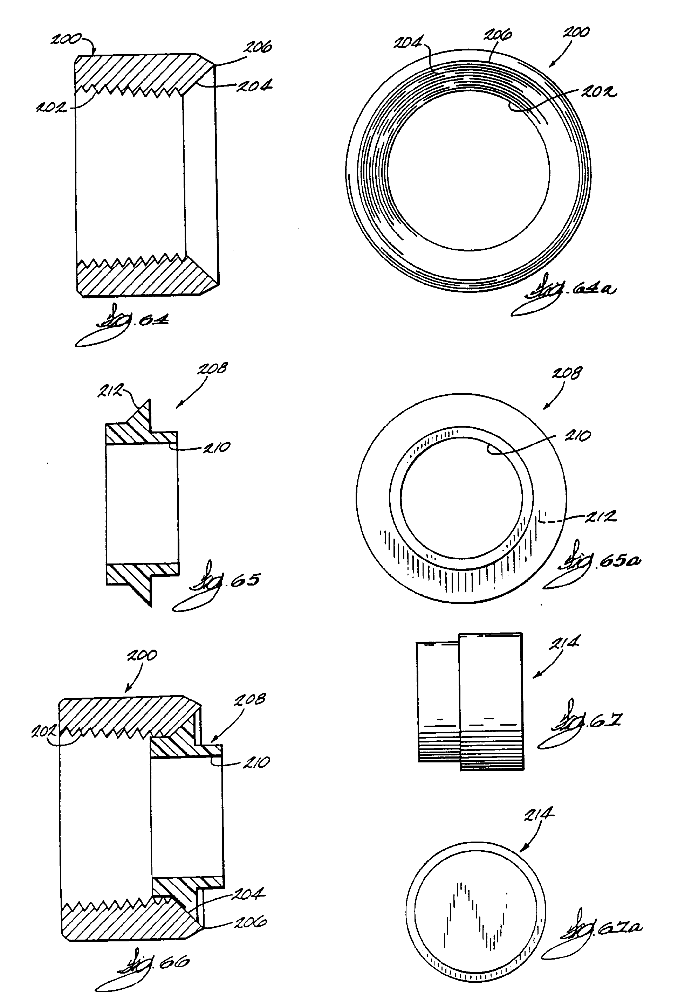

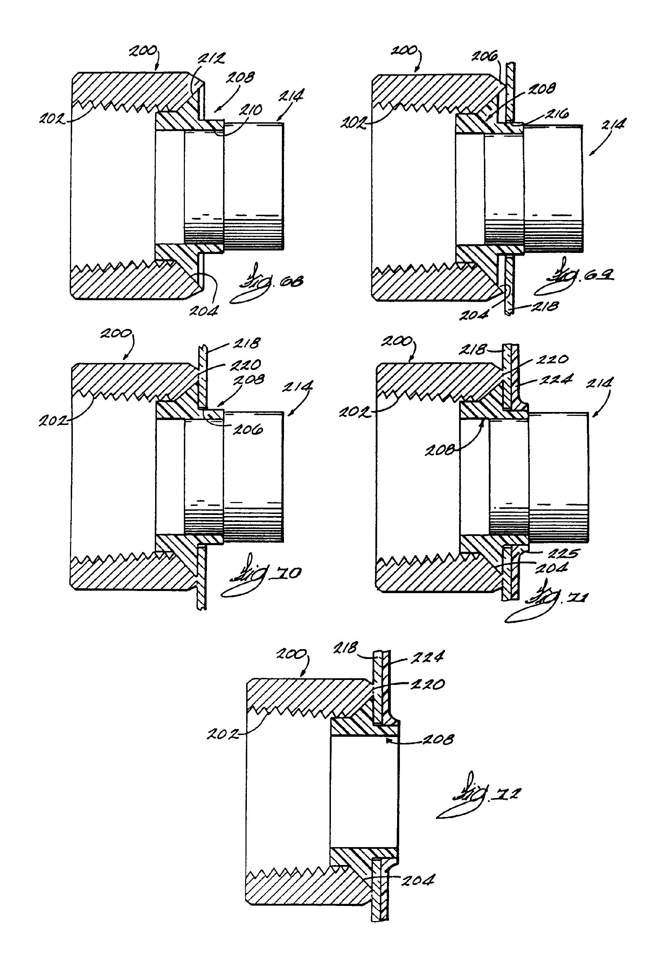

Figure 18 shows the cap 68 (made from material having low thermal conductivity) and having a head portion 70 and a body portion 72. Plug 62 and cap 68 are assembled as shown in Figure 19 with the body 72 of cap 68 pressed into the threaded portion 64 of plug 62.

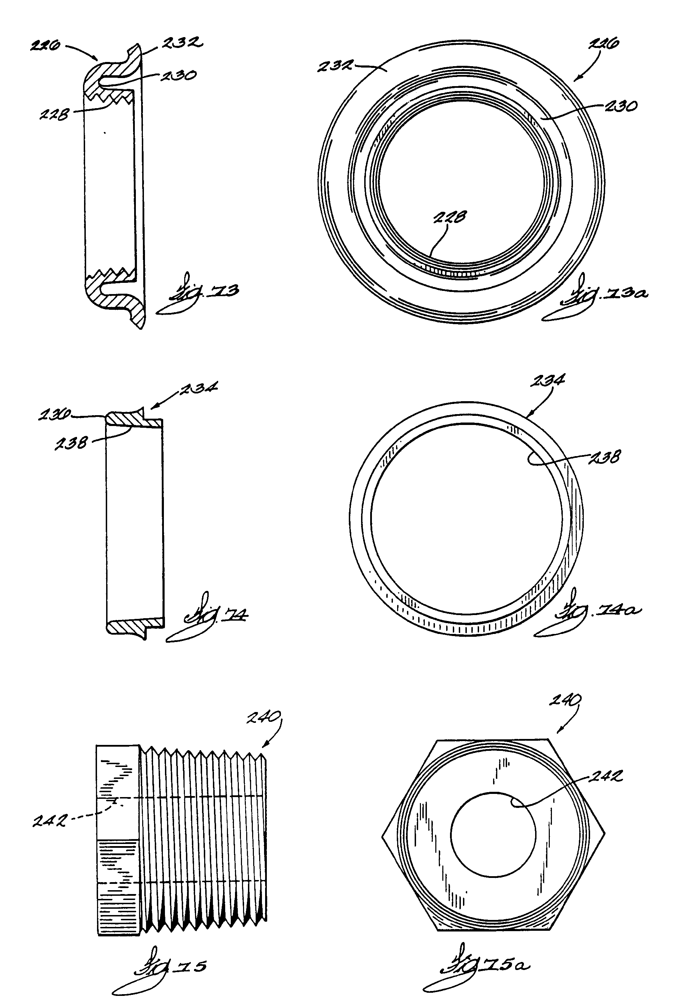

The next step is to thread the Figure 19 assembly into the connector assembly of Figure 16 as shown in Figure 20. With the parts so assembled there will be a space 70 between the body portion 56 of sleeve 54 and the threaded exterior 64 of plug 62.

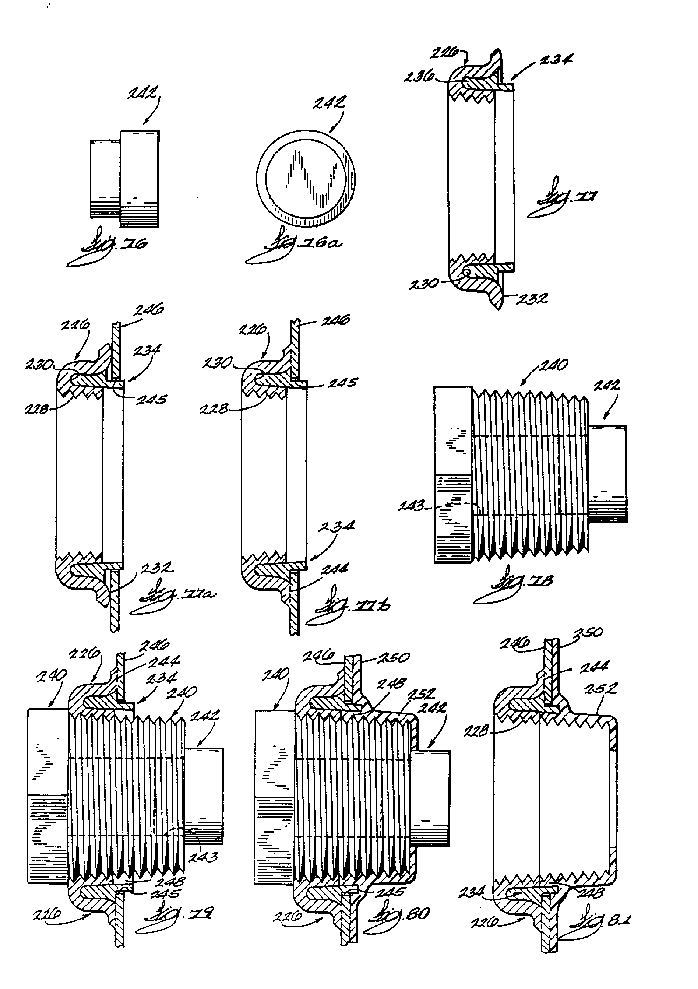

The next step is to form an inner shell 73 of non-corrosive and non-metallic material inside outer tank shell 60 with the plug and cap installed as shown in Figure 21.

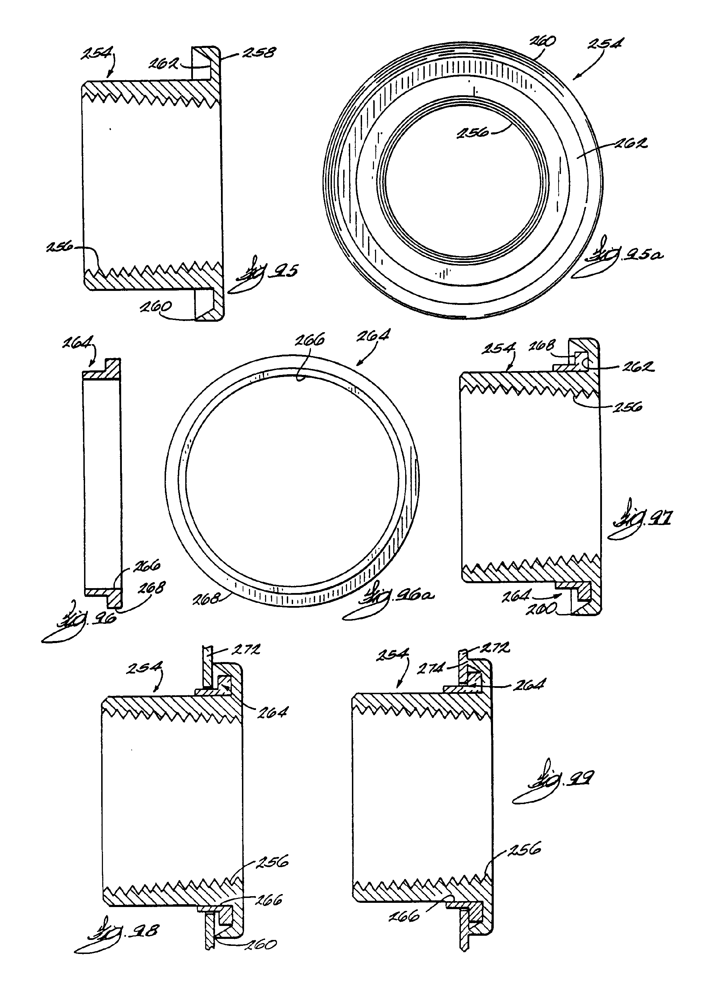

The formation of inner shell 73 in outer shell 60 can be accomplished as described with respect to the first embodiment shown in Figures 1-11. After the formation of inner shell 73 the plug and cap assembly is removed to produce the finished connector construction as shown in Figure 22. There shown, the space 70 will be filled with the inner shell material forming a threaded portion 74 of the inner shell which will fuse to the material of sleeve member 54.

### Third Embodiment

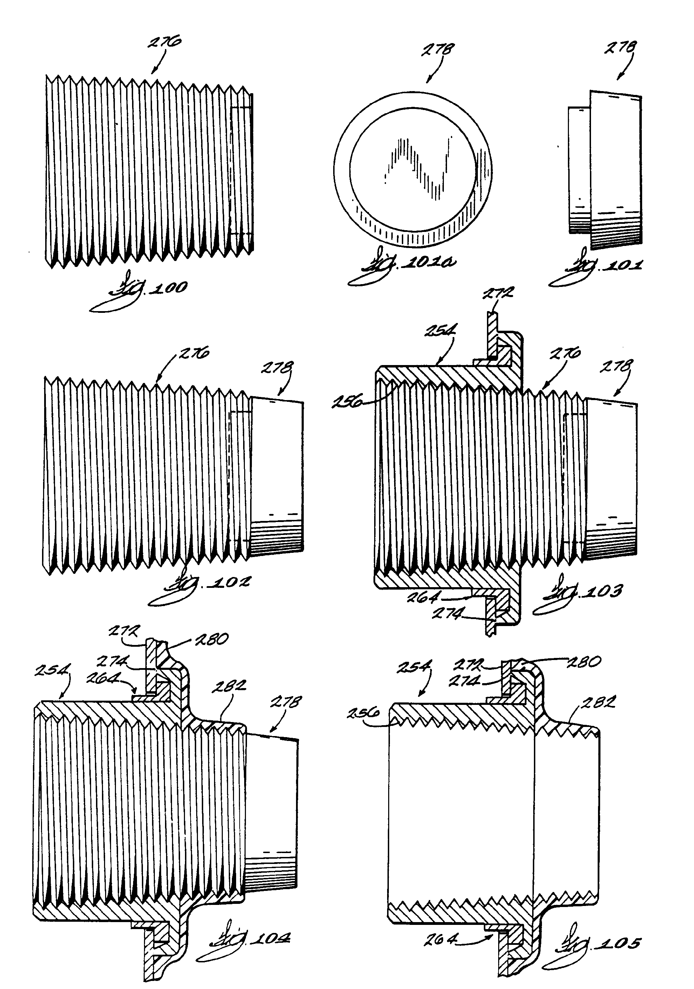

Figures 23-31 show a third embodiment of the present invention. This embodiment is particularly adapted for making hot and cold water connections to a water heater tank.

Figures 23 and 23a show a threaded connector fitting 76 having an internal threaded body portion 78, internal grooves 80 and 82 and a weld projection portion 84. Fitting 76 is preferably made of metal.

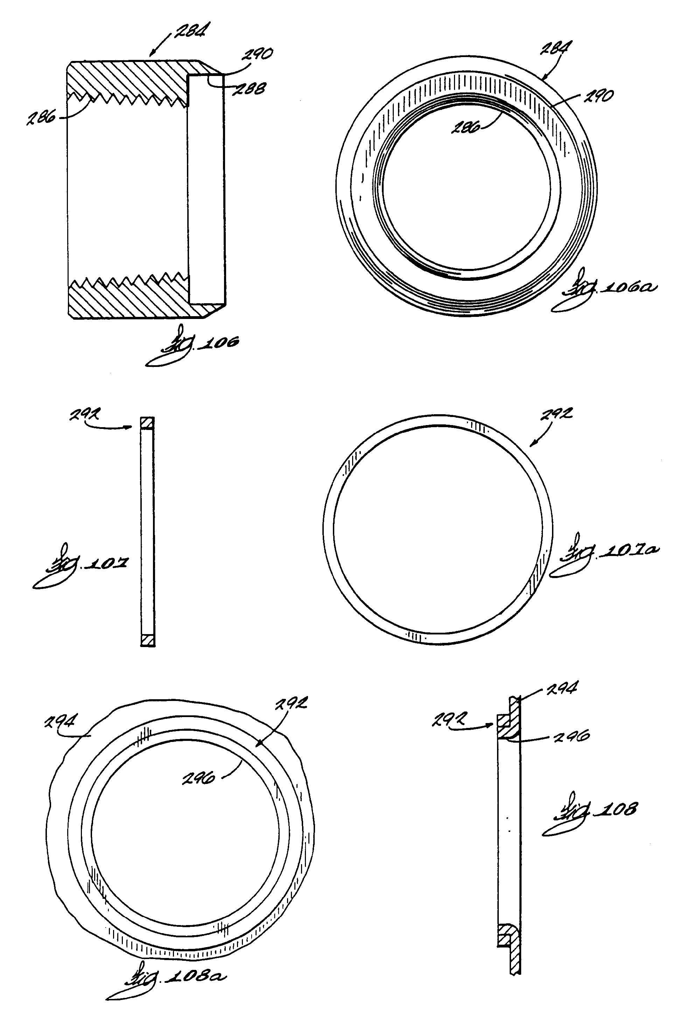

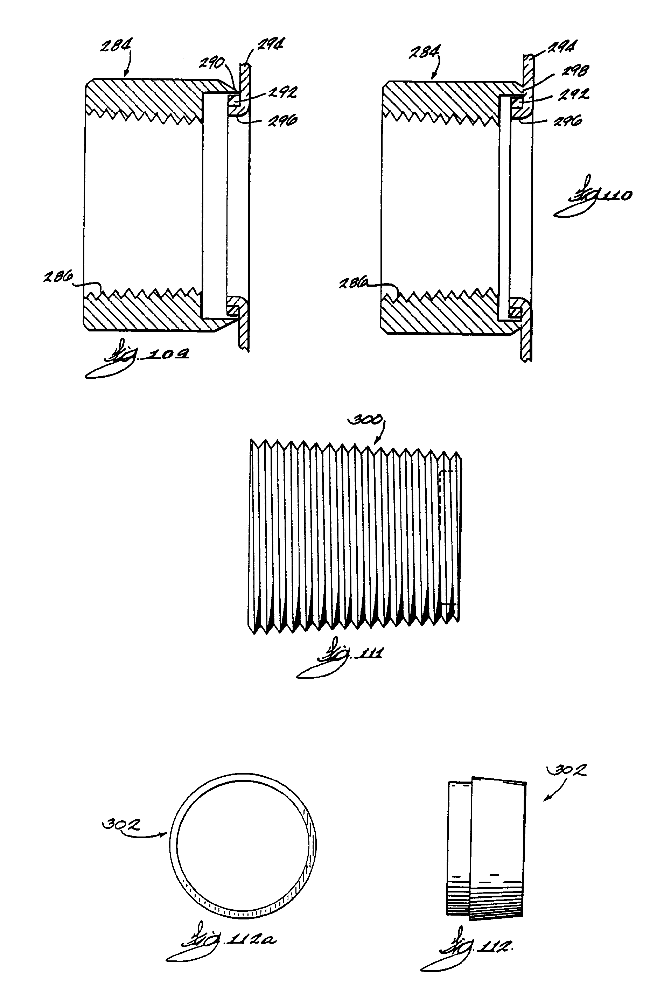

Figures 24 and 24a show a sleeve member 86 having a curved body portion 88 and a radially extending flange portion 90. Member 86 is preferably of a polymer material. Figure 25 shows the assembly of fitting 76 and sleeve 86 with flange 90 of the sleeve seated in the groove 82 of the fitting.

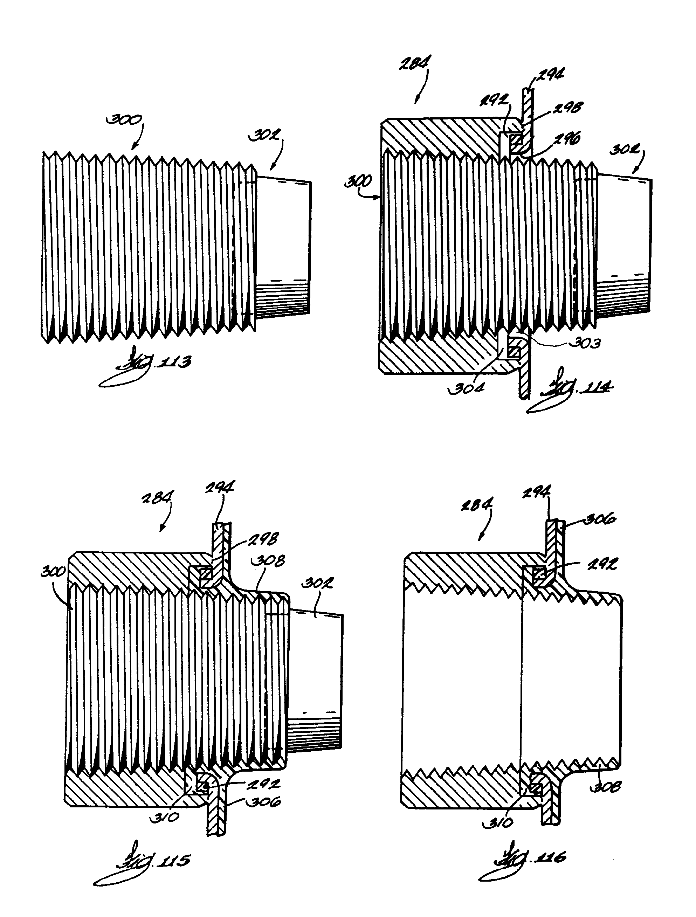

As shown in Figure 26, the assembly of Figure 25 is positioned in an opening 91 of an outer metal shell 92 with the weld projection 84 on fitting 76 in contact with the outer metal shell 92. The curved body portion 88 of the sleeve 86 serves to center the Figure 25 assembly in the outer metal shell opening 91.

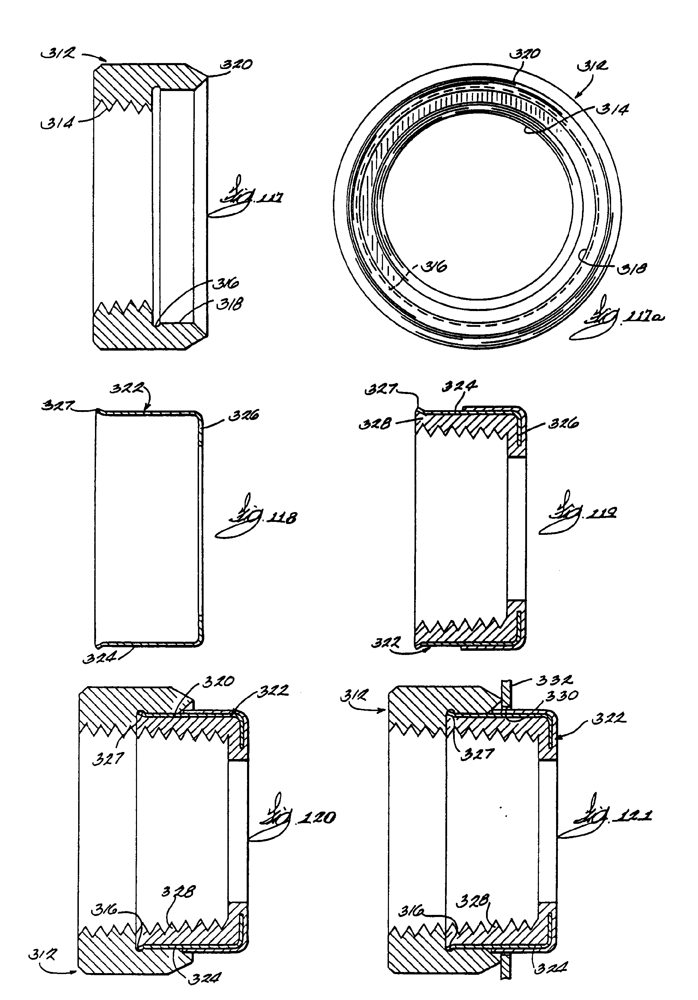

The next step is to weld the weld projection 84 of fitting 76 to the outer metal shell 92 preferably by a resistance welding procedure. The resulting structure is shown in Figure 27. As there shown, weld projection 84 on the fitting will be deformed and fused to the outer metal shell 92 as indicated by reference numeral 94.

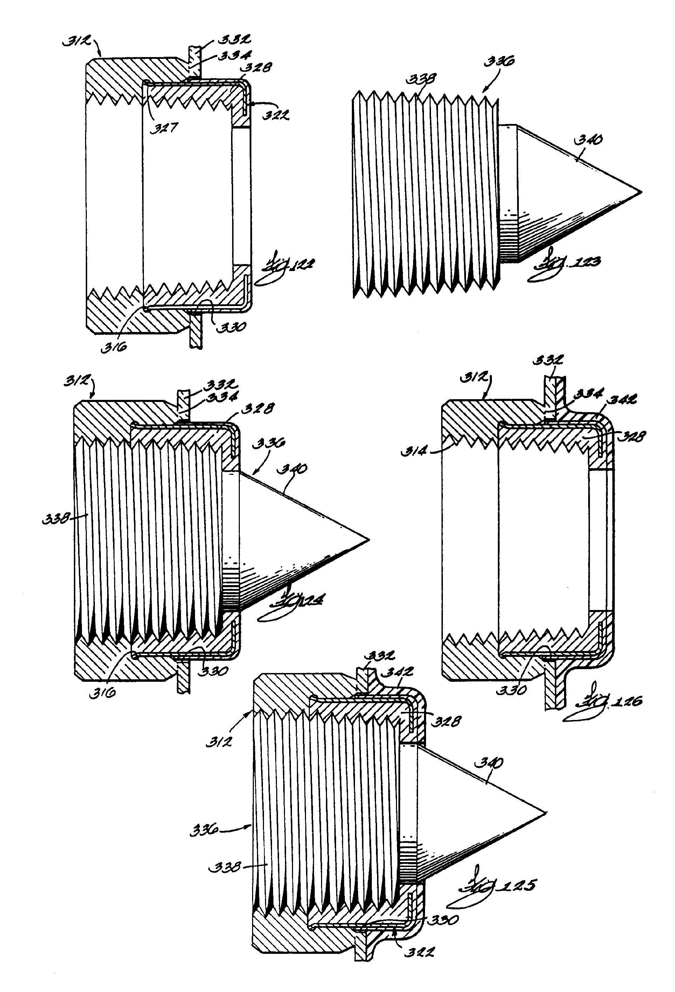

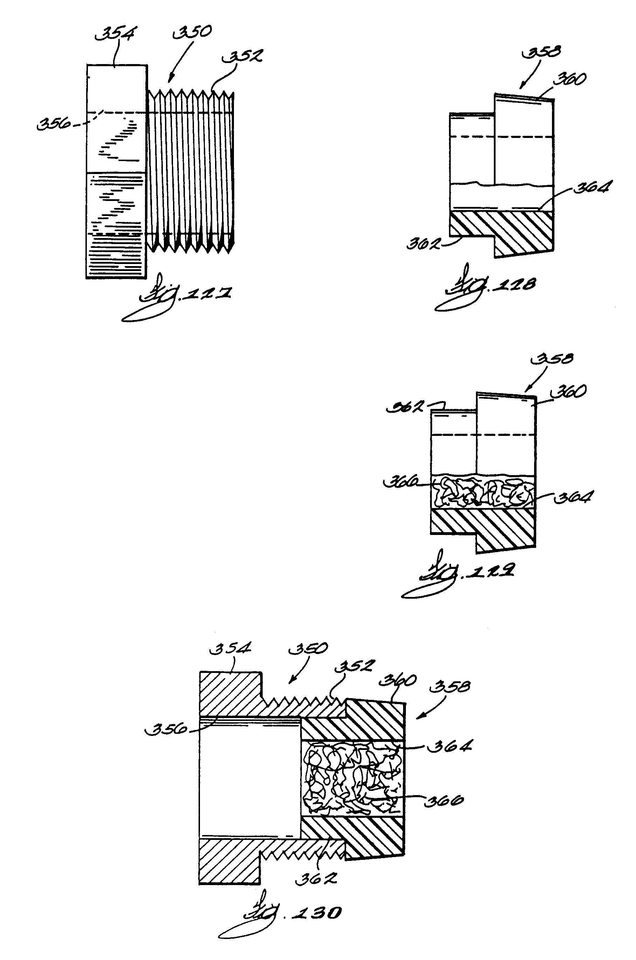

Figures 28 and 28a show a cap member 96 (made from material having low thermal conductivity) and having a nose portion 98 and a flange portion 100. Figure 29 shows the assembly of Figure 27 with the cap member 96 installed therein.

The next step is to form an inner shell 102 of non-corrosive and non-metallic material inside the outer metal shell 92 as shown in Figure 30. As there shown, the inner shell 102 has an extension portion 103 formed around and covering the curved body 88 of sleeve 86 and will curve around and extend into the groove 80 in the fitting 76. Extension portion 103 will be fused to the surface 88 of sleeve 86. It will be appreciated as shown in Figure 30 that the cap member 96 will prevent any tendency of the material of the inner shell 102 from being in contact with the inner threaded bore 78 of fitting 76.

Figure 31 shows the assembly of Figure 30 after the cap member 96 has been removed. The end of fitting (not shown) when threaded into fitting 76 will lock the end of liner extension portion 103 into place.

The procedure for forming inner shell 102 (and extension 103) inside the outer tank shell 92 may be like that described above with respect to the first embodiment.

### Fourth Embodiment

Figures 32-42 show a fourth embodiment of the present invention. This embodiment is particularly adapted for making connections to a tank of an electric water heater as described with reference to the first embodiment. Figures 32 and 32a show a threaded connector fitting 104 having an internal threaded body portion 106, an internal groove 108 and a weld projection portion 110. Fitting 104 is preferably made of metal.

Figures 33 and 33a show a sleeve member 112 having a cylindrical body portion 114 and a radially extending flange portion 116. In the preferred embodiment sleeve 112 is made of a polymer material.

The next step is to assemble the parts shown in Figures 32 and 33 to produce the assembly shown in Figure 34. As there shown, the flange 116 of sleeve 112 is seated in the groove 108 of fitting 104.

The assembly of Figure 34 is positioned in an opening 118 of an outer metal shell 120 of a tank with the weld projection 110 on fitting 104 in contact with the outer metal shell 120. The body 114 of the sleeve 112 serves to center the Figure 34 assembly in the outer metal shell opening 118.

The next step is to weld the weld projection 110 of fitting 104 to the tank shell 120 of a tank preferably by a resistance welding procedure.

The resulting structure is shown in Figure 36. As there shown, weld projection 110 on the fitting 104 will be deformed and fused to outer metal shell 120 as indicated by reference numeral 122.

Figures 37 and 37a show a plug member 124 (made from material having high thermal conductivity) and having a threaded portion 126 and a head portion 128.

Figures 38 and 38a show a cap 130 (made from material having low thermal conductivity) and having a head portion 132 and a body portion 134. Plug 124 and cap 130 are assembled as shown in Figure 39 with the body 134 of cap 130 pressed into the threaded portion 126 of plug 124.

The next step is to thread the Figure 39 assembly into the connector assembly of Figure 36 as shown in Figure 40. With the parts so assembled there will be a space 136 between the body portion 114 of sleeve 112 and the threaded exterior 126 of plug 124.

The next step is to form an inner shell 138 inside the outer metal shell 120 with the plug and cap assembly installed as shown in Figure 41. Such inner shell 138 may be formed as described with respect to the first embodiment. Preferably the inner shell 138 is made from a polymer material. As best shown in Figure 41 the polymer material of inner shell 138 will flow into the space 136 between the body portion of the sleeve and the threaded exterior of plug 124 to form a threaded extension portion 140. The polymer material in space 136 will contact and become fused with the sleeve member 112. In the preferred embodiment the polymer material of sleeve 112 and the inner shell 138 will be of substantially identical formulation.

After shell 138 is formed as described above, the plug and cap assembly of Figure 39 is removed. The resulting connector construction is shown in Figure 42. As there shown, the polymer material of inner shell 138 (and extension 140) will substantially prevent the contents of the tank (such as water) from coming in contact with the metal outer shell 120 and the surfaces of metal fitting 104. The threads 140 of polymer material serve as an extension of the threaded bore 106 of fitting 104.

### Fifth Embodiment

Figures 43-52 show a fifth embodiment of the present invention. This embodiment is particularly adapted for use as a drain connection, a temperature and pressure valve connection, or a gas control valve connection all for a water heater tank. Figures 43 and 43a show a threaded connector fitting 142 having an internal threaded body portion 144, an internal groove 146 and a weld projection portion 148. Fitting 142 is preferably made of metal.

Figures 44 and 44a show a metal tube member 150 having a body portion 152 and a flange 154.

Figures 45 and 45a show a retaining ring 156.

Figures 46 and 46a show a locating cup 158 having a bottom wall 160 and a side wall 162. Cup 158 is made of material having low thermal and electrical conductivity.

Figure 47 shows an assembly of the parts shown in Figures 43 and 44. Figure 48 shows the assembly of Figure 47 with the retaining ring 156 positioned to hold the cup member securely in place.

Figure 49 shows an assembly of the parts shown in Figure 48 with the part shown in Figure 46.

The next step is to position the assembly of Figure 49 in an opening 163 of an outer metal shell 164 of a tank with the weld projection 148 on fitting 142 in contact with the outer metal shell 164. The locating member 158 serves to center the Figure 49 assembly in the outer metal shell opening 163.

The next step is to weld the weld projection 148 of fitting 142 to the outer metal shell 164 preferably by a resistance welding procedure. The resulting structure is shown in Figure 51. As there shown, weld projection 148 on the fitting 142 will be deformed and fused to the outer metal shell 164 as indicated by reference numeral 166.

The next step is to remove the locating cup 158 from the assembly shown in Figure 51. This is accomplished by simply pushing down on the cup through the fitting 142.

The next step is to install a plug assembly (Figure 51c) into the Figure 51 assembly as shown in Figure 51d. The Figure 51c assembly is comprised of a metal plug 141 having a threaded portion 143 shown in Figure 51a with cap 147 shown in Figure 51b. As shown in the Figure 51d assembly, there is a space 165 immediately adjacent the upper portion of tube member 152.

The next step is to form an inner shell 168 inside outer shell 164 with the parts assembled as shown in Figure 51d. Such inner shell 168 may be formed as described with respect to the first embodiment. Preferably the inner shell 168 is made from a polymer material. The resulting structure is shown in Figure 51e with the polymer material of inner shell 168 penetrating into space 165 to form an extension portion 167.

After inner shell 168 is formed as shown in Figure 51e, the plug assembly is removed. The resulting connector construction is shown in Figure 52. As there shown, the polymer material of inner shell 168 will substantially prevent the contents of the tank (such as water) from coming into contact with the metal outer shell 164 of the tank.

### Sixth Embodiment

Figures 53-63 show a sixth embodiment of the present invention. This embodiment is particularly adapted for making connections to a water heater tank as described with reference to the first embodiment.

Figures 53 and 53a show a threaded connector fitting 170 having an internal threaded body portion 172, internal grooves 174 and 176 and a weld projection portion 178. Fitting 170 is preferably made of metal.

Figures 54 and 54a show a sleeve member 180 having a curved body portion 184 and a radially extending flange portion 182. Sleeve member 180 is preferably made of a polymer material.

Figure 55 shows the assembly of fitting 170 and sleeve 180 with flange 182 seated in the groove 174 of the fitting 170.

Figures 56 and 56a show a locator 186 preferably made of material having low thermal conductivity.

Figure 57 shows an assembly of the locating plug shown in Figure 56 with the assembly shown in Figure 55.

As shown in Figure 58, the assembly of Figure 57 is positioned in an opening 188 of an outer metal shell 190 with the weld projection 178 on fitting 170 in contact with the outer metal shell 190. The locator 186 serves to center the Figure 57 assembly in the outer metal shell opening 188.

The next step is to weld the weld projection 178 of fitting 170 to the outer metal shell 190 preferably by a resistance welding procedure. The resulting structure is shown in Figure 59. As there shown, weld projection 178 on the fitting will be deformed and fused to outer metal shell 190 as indicated by reference numeral 192.

Figures 60 and 60a show a cap member 194 preferably made of a material having low thermal conductivity rating such as Teflon. Figure 61 shows the assembly of Figure 59 with the cap 194 installed therein.

The next step is to form an inner shell 196 of non-corrosive and non-metallic material inside the outer metal shell 190 as shown in Figure 62. As there shown, the inner shell 196 will be formed around and become fused to the curved body portion 184 of sleeve member 180. As indicated by reference numeral 198, the curved extension portion of the inner shell 196 serves to lock that portion of the inner shell into the groove 199 in the sleeve 180. The curved portion 184 of sleeve 180 will become fused to the inner shell 196.

Figure 63 shows the assembly of Figure 62 after the cap member 194 has been removed.

The procedure for forming inner shell 196 inside the outer shell 190 of the tank may be like that described above with respect to the first embodiment.

### Seventh Embodiment

Figures 64-72 show a seventh embodiment of the present invention. This embodiment is particularly adapted for making hot and cold water connections to a water heater tank.

Figures 64 and 64a show a threaded connector fitting 200 having an internal threaded body portion 202, a beveled end portion 204 and a weld projection portion 206. Fitting 200 is preferably made of metal.

Figure 65 and 65a show a sleeve member 208 having a cylindrical body portion 210 and an angled flange portion 212. In the preferred embodiment, sleeve 208 is made of polymer material.

Figure 66 shows the assembly of fitting 200 and sleeve 208 with the flange 212 of the sleeve seated against the beveled end portion 204 of the fitting 200. Figures 67 and 67a show a cap member 214 made of a material having low thermal conductivity rating such as Teflon.

Figure 68 shows the assembly of Figure 66 with the cap member 214 installed inside the sleeve member 208 as indicated by reference numeral 225.

As shown in Figure 69, the assembly of Figure 68 is positioned in an opening 216 of an outer metal shell 218 with the weld projection 206 on fitting 200 in contact with the outer metal shell 218. The sleeve member 208 serves to center the Figure 68 assembly in the opening 216.

The next step is to weld the weld projection 206 of fitting 200 to the outer metal shell 218 preferably by a resistance welding procedure. The resulting structure is shown in Figure 70. As there shown, weld projection 206 on fitting 200 will be deformed and fused to shell 218 as indicated by reference numeral 220.

The next step is to form an inner shell 224 of non-corrosive and non-metallic material inside the outer metal shell 218 as shown in Figure 71. As there shown, the inner shell 224 will make contact with and be fused to the sleeve member 208. It will be appreciated as shown in Figure 71 that the cap member 214 will prevent the material of the inner shell 102 from coming in contact with the inner threaded bore 202 of fitting 200.

Figure 72 shows the completed assembly after the cap member 214 has been removed. It will be appreciated that the inner shell 224 will prevent contact between the material in the tank such as water from coming into contact with the outer shell 218. The procedure for forming inner shell 224 inside the outer shell 218 may be like that described above with respect to the first embodiment.

### Eighth Embodiment

Figures 73-81 show an eighth embodiment of the present invention. This embodiment is particularly adapted for making connections to a water heater tank as described with reference to the first embodiment (Figures 1-11). Figures 73 and 73a show a threaded connector fitting 226 having an internal threaded body portion 228, a groove 230 and a weld projection portion 232. Fitting 226 is preferably made of metal.

Figures 74 and 74a show a sleeve member 234 having a curved end portion 236 and a cylindrical bore 238. Sleeve 234 is preferably made of a polymer material.

Figure 77 shows the assembly of the fitting 226 of Figure 73 with the sleeve 234 of Figure 74 with the rounded end portion 236 of the sleeve seated in the groove 230 of the fitting 226.

Figure 75 and 75a show a plug member 240 having an internal bore 242. Plug member 240 is preferably made of a material having high thermal conductivity. Figures 76 and 76a show a cap 242 preferably made of a material having low thermal conductivity. Figure 78 shows the assembly of the plug 240 and the cap 242.

As shown in Figure 77a the assembly of Figure 77 is positioned in an opening 245 of an outer metal shell 246 with the weld projection 232 on fitting 226 in contact with the outer metal shell 246. The end portion of sleeve 234 serves to center the assembly of the Figure 77 in the outer metal shell opening 245.

The next step is to weld the weld projection 232 of fitting 226 to the outer metal shell 246 preferably by a resistance welding procedure. The resulting structure is shown in Figure 79. As there shown, weld projection 232 on fitting 226 will be deformed and fused to shell 246 as indicated by reference numeral 244. Figure 79 also shows the plug assembly of Figure 78 threaded into the fitting 226 leaving a space 248 between the plug threads and the sleeve 234.

The next step is to form an inner shell 250 of non-corrosive and non-metallic material inside the outer tank shell 246 as shown in Figure 80. As there shown, the inner shell 250 will be formed around the inner end portion of the plug 240 and will penetrate into space 248 and become fused to the sleeve 234.

Figure 81 shows the assembly of Figure 80 after the plug 240 has been removed. The material of inner shell 250 which has been formed around the end of plug 240 forms a threaded extension 252 of the threaded bore 228 of fitting 226.

The procedure for forming inner shell 250 inside the outer metal shell 246 may be like that described above with respect to the first embodiment. It will be appreciated that the inner shell 250 prevents contact between the material in the tank 246 with the wall of the tank.

### Ninth Embodiment

Figures 95-105 show a ninth embodiment of the present invention. This embodiment is particularly adapted for connecting hot and cold water connections to a water heater tank.

Figures 95 and 95a show a threaded connector fitting 254 having a threaded bore 256, a flange portion 258, a weld projection 260 and a notched portion 262 formed by the flange 258 and weld projection 260. Fitting 254 is preferably made of metal.

Figures 96 and 96a show a sleeve member 264 having a body portion 266 and a flange portion 268. Sleeve 264 is preferably made of material having low thermal conductivity.

Figure 97 shows the assembly of the Figure 96 sleeve 264 and the Figure 95 fitting 254. The flange 268 on the sleeve seated in the notch 262 of the fitting 254.

Figure 98 shows the Figure 97 assembly positioned in an opening 270 in an outer shell 272 with the weld projection 260 in contact with the outer metal shell 272. Sleeve 264 serves to center the fitting 254 in the opening 270.

Figure 99 shows the assembly of Figure 98 after the fitting 254 has been welded to the outer metal shell 272. The weld is identified by reference numeral 274. In the preferred embodiment the weld is made by a resistance welding procedure.

Figure 100 shows a threaded plug preferably made of material having high thermal conductivity. Figures 101 and 101a show a cap preferably made of material having low thermal conductivity. Figure 102 shows the assembly of the plug 276 and cap 278 shown in Figures 100 and 101. Figure 103 shows the Figure 99 assembly with the plug and cap threaded therein.

The next step is to form an inner shell 280 inside the outer tank shell 272 with the plug and cap installed as shown in Figure 103. Such inner shell may be formed as described in the first embodiment. As shown in Figure 104, the material of the inner shell 280 will form itself around the lower threaded portion of plug 276 as identified by reference numeral 282. The material of the inner shell will not adhere to the cap 278 because it is of a non-heat conductive material.

After the inner shell 280 is formed the plug and cap assembly 276, 278 is removed. The resulting connector construction is shown in Figure 105. The threaded extension portion 282 of the inner shell forms an extension of the threaded bore 256 of fitting 254. The resulting connector construction (Figure 105) will substantially prevent the contents of the tank (such as water) from coming in contact with the metal outer shell 272 of the tank.

### Tenth Embodiment

Figures 106-116 show a tenth embodiment of the present invention. Such embodiment is particularly designed for making hot and cold connections to a water heater tank.

Figures 106 and 106a show a threaded connector fitting 284 having a threaded bore 286, a weld projection 290 and a groove 288. Fitting 284 is preferably made of metal.

Figures 107 and 107a show a ring member 292 preferably made of non-corrosive and non-metallic polymer material.

Figures 108 and 108a show an outer metal shell 294 having a flared opening 296 around which the ring 292 is positioned.

Figure 109 shows the fitting 284 positioned on the outer metal shell 294. The ring 292 serves to center the fitting 284 over the opening 296.

Figure 110 shows the assembly of Figure 109 after the fitting 284 has been welded to the outer metal shell 294. The weld area is identified by reference numeral 298. In the preferred embodiment the weld is made by a resistance welding procedure.

Figure 111 shows a plug 300 made of a material having high thermal conductivity. Figures 112 and 112a show a cap 302 made of a material having low thermal conductivity. Figure 113 shows the assembly of the Figure 11 plug 300 and the Figure 112 cap 302. Figure 114 shows the assembly of Figure 110 with the plug and cap assembly threaded therein. As further noted in Figure 114, there is a space 303 between the plug and the flared opening 296 and a second space 304 located above the ring 292.

The next step is to form an inner shell 306 inside the outer metal shell 294. The inner shell is preferably made of a polymer material. The procedure for forming the inner shell 306 may be like that described with respect to the first embodiment. The inner shell 306 will extend around the threads on the lower portion of plug 300 as shown by reference numeral 308, Figure 115. The material of inner shell 306 will not adhere to the cap member 302 because of it is made of a non-heat conductive material. It is further noted in Figure 15 that the material of the inner shell 306 will flow into spaces 303 and 304 and become fused to ring 292.

After the plug and cap assembly is removed the resulting connector construction is shown in Figure 116. Such construction will substantially prevent the contents of the tank (such as water) from coming in contact with the metal outer shell 294. The threaded extension portion 308 of the inner shell 306 forms a continuation of the threaded bore 286 of fitting 284.

### Eleventh Embodiment

Figures 117-126 show an eleventh embodiment of the present invention. Such embodiment is particularly adapted for connecting hot and cold water pipes to a water heater tank.

Figures 117 and 117a show a threaded connector fitting 312 having a threaded bore 314, an internal groove 316, an internal groove 318 and a weld projection 320. Fitting 312 is preferably made of metal.

Figure 118 shows a cup 322 having a body portion 324, a lower flange portion 326 and a flared upper edge 327. Cup 322 is preferably made of metal.

Figure 120 shows the assembly of the cup member of Figure 118 and the fitting 312 with the edge 327 of cup 322 seated in the groove 316. Figure 119 shows the assembly of fitting 312 and cup 322 with molded body 328 made of polymer material. This may be accomplished by any acceptable procedure, such as injection molding. Figure 121 shows the assembly of Figure 120 positioned in an opening 330 of an outer metal shell 332. Figure 122 shows the assembly of Figure 121 after the fitting 312 has been welded to the outer metal shell 332 as indicated by the weld area 334. The weld is preferably made by a resistance welding procedure. Figure 123 shows a cap 336 having a threaded body 338 and a pointed lower portion 340. The cap 336 is preferably made of a material having low thermal conductivity.

Figure 124 shows the assembly of Figure 122 with the cap 336 installed therein. The next step in the fabrication is the formation of an inner shell 341 inside the outer metal shell 332. Such inner shell 341 is preferably made of a polymer material and may be formed as described with respect to the first embodiment. The material of inner shell 341 will come into contact with and become fused to body 328 on cup 322. Such extension portion of the inner shell is identified by reference numeral 342. After inner shell 341 (with extension 342) is formed, the cap 336 is removed. The resulting connector construction is shown in Figure 126. Such Figure 126 construction will substantially prevent the contents of the tank (such as water) from coming into contact with the metal outer shell 332.

Figures 127-130 show a special plug and cap design which may be used for example in the first embodiment of the invention described above.

Figure 127 shows a plug 350 having a threaded end portion 352, a head portion 354 and a central opening 356 extending therethrough. Plug 350 is preferably made from a high thermal conductivity material.

Figure 128 shows a cap 358 having a head portion 360, an end portion 362 and a central opening 364 extending therethrough. Cap 358 is preferably made from a material having low thermal conductivity characteristics. Figure 129 shows the Figure 128 cap with a plug 366 of porous material such as fiberglass mounted in opening 364.

Figure 130 shows the assembly of the Figure 127 plug with the Figure 129 cap with the end portion 362 of the cap fitted inside the opening 356 of the plug.

It will be appreciated that if the plug and cap as shown in Figures 127-130 were used in the first embodiment described above, any build up of pressure inside the tank during the rotational casting procedure will be vented to atmosphere through the porous plug material 366. Plug material 366 also serves to prevent any solid material from passing out from inside the tank during the casting step.

## Claims

1. A tank connector construction for connecting the interior to the exterior of a tank which is comprised of an outer shell (26, 60, 92, 120, 190, 218, 246, 294, 332) of metal and an inner shell (44, 73, 102, 138, 196, 224, 250, 306, 341) of non-corrosive and non-metallic material said connector comprising:
a metal connector fitting means (10, 46, 76, 104, 170, 200, 226, 284, 312) having an internal threaded body portion (12, 48, 78, 106, 172, 202, 228, 286, 314); an internal groove (14, 50, 80, 82, 108, 174, 176, 204, 230, 288, 316, 318) and a weld projection portion (16, 52, 84, 110, 178, 206, 232, 290, 320) on the inner end thereof for being welded to the metal outer shell of the tank;
a sleeve member means (18, 54, 86, 112, 180, 208, 234, 292, 328) of non-corrosive and non-metallic material seated in said internal groove in said connector fitting means; for being fused to an extension portion (43, 74, 103, 140, 198, 225, 252, 308, 342) of non-corrosive and non-metallic material formed integrally with the inner shell of the tank to prevent contact between the contents of the tank and the outer shell of the tank.

2. A tank connector construction according to claim 1 in which said non-corrosive and non-metallic material of said sleeve means (18, 54, 86, 112, 180, 208, 234, 292, 328) and said extended portion (43, 24, 103, 140, 198, 225, 252, 308, 342) is a polymer material.

3. A tank connector construction according to claim 1 or 2 in which said metal connector fitting means (76, 170, 312) has a second internal groove (80, 174, 316) at the outer end thereof.

4. A tank connector construction according to any one of claims 1 to 3 wherein said sleeve means (328) includes a metal tube member (322) having a cylindrical body portion (324), a lower flange portion (326) and a flared upper edge portion (327), said metal tube member (322) having a coating of non-corrosive and non-metallic material formed around and adhered to the surface of said metal tube member (322), said metal tube member (322) mounted in the inner end of said metal connector fitting means (312) with said flared end portion (327) seated in said internal groove (316) of said fitting means (312); said extension portion (342) of non-corrosive and non-metallic material formed integrally with said inner shell (341) of the tank being fused to said coating material on said metal tube member (322) to prevent contact between the contents of the tank and the outer shell (332) of the tank.

5. A tank connector construction for connecting the interior to the exterior of a tank which is comprised of an outer shell (164) of metal material; and an inner shell (168) of non-corrosive and non-metallic material mounted inside of said outer shell (164);
said connector comprising: a metal connector fitting means (142) having an internal threaded body portion (144), an internal groove (146) and a weld projection portion (148) on the inner end thereof for being welded to said outer shell (164);
a metal tube member (150) having a cylindrical body portion (152) and a flange portion (154), said metal tube member (150) mounted in said inner end of said metal connector fitting means (142) with said tube flange (154) seated in said internal groove (146) of said fitting means (142); and
a retaining ring member (156) mounted in said internal groove (146) of said metal connector fitting means (142) to hold said metal tube member (150) securely in place;
the cylindrical body portion (152) of said metal tube member (150) having an outer surface for being adhered to an extension portion (167) of non-corrosive and non-metallic material formed intergrally with said inner shell (168) of the tank to prevent contact between the contents of the tank and the outer shell (164) of the tank.

6. A tank connector construction of any one of claims 1 to 5, comprising plug means (30, 36, 62, 68, 96, 124, 130, 141, 147, 194, 214, 240, 242, 300, 302, 336, 350, 358) received within said internal threaded body portion (12, 48, 78, 106, 144, 172, 202, 228, 286, 314) and including a part (36, 68, 96, 130, 147, 194, 214, 242, 302, 358) of a material having a low thermal conductivity.

7. A tank connector construction for connecting the interior to the exterior of a tank which is comprised of an outer shell (272) of metal material having an opening (270) therein and an inner shell (280) of non-corrosive and non-metallic material mounted inside said outer shell (272); said connector comprising:
a metal connector fitting means (254) having an internal threaded body portion (256), a weld projection portion (260), at one end of said body portion (256) for being welded to the outer shell (272) of said tank, and a groove (262) arranged at said one end of said body portion (256) and open toward the other end of said body portion (256).
a ring member (264) seated in said external groove (262) in said metal connector fitting means (254) for centering said fitting means (254) in said outer shell (272); and
a threaded plug means (276, 278) received in said internal threaded body portion and extending out of said one end of said body portion (256) for forming a threaded portion (282) of non-corrosive and non-metallic material integrally with said inner shell (280), said threaded portion (282) forming a continuation of said internal threaded body portion (256) of said metal connector fitting means (254).

8. The tank connector construction according to claim 6 or 7 in which said plug means include a plug (350) and a cap (358) said plug and said cap have a central opening (350, 364) extending therethrough with a plug (366) of porous material mounted in said central opening (364).

9. A tank having an outer shell (26, 60, 92, 120, 164, 190, 218, 246, 272, 294, 332) of metal material and an inner shell (44, 73, 102, 138, 168, 196, 224, 250, 280, 306, 341) of non-corrosive and non-metallic material **characterized by**
a tank connector construction according to any one of claims 1 to 8.

10. A tank according to claim 9 in which said weld projection (16, 52, 84, 110, 178, 206, 232, 290, 320) of said connector fitting (10, 46, 76, 104, 170, 200, 226, 284, 312) is welded to the outer shell (26, 60, 92, 120, 190, 218, 246, 294, 332) by a resistance welding procedure.

11. A tank according to claim 9 or 10 in which said sleeve means (18, 54, 86, 112, 180, 208, 234, 292, 328) serves to center said connector fitting in an opening (24, 59, 91, 118, 188, 216, 245, 296, 330) in the outer tank shell.

12. A tank according to claims 2 and 9 in which the end of said extension portion (103) is seated in said second annular groove (80).

13. A tank according to any one of claims 9 to 12 in which said extension portion (43, 74, 140, 252, 308) of non-corrosive and non-metallic material has a threaded portion which forms a continuation of the internal threaded body portion (12, 48, 106, 228, 286) of said metal connector fitting means (10, 46, 104, 226, 284).

14. A tank according to any one of claims 9 to 13 in which said sleeve member means (86, 180) has a curved internal body portion (88, 184) to which said extension portion (103, 198) is fused.

15. A method of fabricating a tank having a connector construction mounted therein to connect the interior of the tank with the exterior of the tank comprising the following steps:
a. providing an outer shell member (26, 60, 92, 120, 190, 218, 246, 294, 332) of metal material;
b. assembling a metal conector fitting means (10, 46, 76, 104, 170, 200, 226, 284, 312) with a sleeve member means (18, 54, 86, 112, 180, 208, 234, 292, 328) of non-corrosive and non-metallic material, said metal connector fitting means having an internal threaded body portion (12, 48, 78, 106, 172, 202, 228, 286, 314), an internal groove (14, 50, 80, 82, 108, 174, 176, 204, 230, 288, 316, 318) and a weld projection portion (16, 52, 84, 110, 178, 206, 232, 290, 320), said sleeve member means mounted in the internal groove of the connector fitting to form an assembly;
c. positioning the assembly of step (b) on the surface of the outer shell of the tank with the sleeve means in alignment with an opening (24, 59, 91, 118, 188, 216, 245, 296, 330) in the outer shell;
d. welding the welding portion of said connector fitting to the outer shell;
e. forming an inner shell (44, 73, 102, 138, 196, 224, 250, 306, 341) of non-corrosive and non-metallic material inside the outer shell with the portion (43, 74, 103, 140, 198, 225, 252, 308, 342) of said inner shell formed around said connector fitting becoming fused to the non-corrosive and non-metallic material of said sleeve means.

16. The method according to claim 15 in which the following step is performed between steps (b) and (e):
installing a plug means (30, 36, 62, 68, 96, 124, 130, 194, 214, 240, 242, 300, 302, 336, 350, 358) in the threaded body (12, 48, 78, 106, 172, 202, 228, 286, 314) of the metal connector fitting (10, 46, 76, 104, 170, 200, 226, 284, 312), said plug means acting to prevent the material of said inner shell from passing out through the metal connector fitting during step (e).

17. The method of claim 15 or 16 wherein said inner shell (44, 73, 102, 138, 196, 224, 250, 306, 341) is formed by a rotational casting procedure.

## Patentansprüche

1. Tankanschlußkonstruktion zum Verbinden des Inneren mit dem Äußeren eines Tanks, der einen äußeren Mantel (26, 60, 92, 120, 190, 218, 246, 294, 332) aus Metall und einen inneren Mantel (44, 73, 102, 138, 196, 224, 250, 306, 341) aus einem nicht korrosiven und nicht metallischen Material aufweist, wobei der Anschluß enthält:
eine metallische Anschlußmontageeinrichtung (10, 46, 76, 104, 170, 200, 226, 284, 312) mit einem mit Innengewinde versehenen Körperbereich (12, 48, 78, 106, 172, 202, 228, 286, 314), einer inneren Nut (14, 50, 80, 82, 108, 174, 176, 204, 230, 288, 316, 318) und einen an seinem inneren Ende angeordneten Schweißvorsprungsbereich (16, 52, 84, 110, 178, 206, 232, 290, 320) zum Anschweißen an den metallenen äußeren Mantel des Tanks;
eine Hülsenteileinrichtung (18, 54, 86, 112, 180, 208, 234, 292, 328) aus einem nicht korrosiven und nicht metallischen Material, die in der inneren Nut in der Anschlußmontageeinrichtung sitzt, um an einen Vorsprungsbereich (43, 74, 103, 140, 198, 225, 252, 308, 342) eines nicht korrosiven und nicht metallischen Materials angeschmolzen zu werden, der integral mit dem inneren Mantel des Tanks ausgebildet ist, um einen Kontakt zwischen den Inhaltsstoffen des Tanks und dem äußeren Mantel des Tanks zu verhindern.

2. Tankanschlußkonstruktion nach Anspruch 1, wobei das nicht korrosive und nicht metallische Material der Hülseneinrichtung (18, 54, 86, 112, 180, 208, 234, 292, 328) und des Vorsprungsbereichs (43, 24, 103, 140, 225, 252, 308, 342) ein Polymermaterial ist.

3. Tankanschlußkonstruktion nach Anspruch 1 oder 2, wobei die metallische Montageeinrichtung (76, 170, 312) an ihrem äußeren Ende eine zweite innere Nut (80, 174, 316) aufweist.

4. Tankanschlußkonstruktion nach einem der Ansprüche 1 bis 3, wobei die Hülseneinrichtung (328) ein metallisches Rohrteil (312) mit einem zylindrischen Körperbereich (324), einem unteren Flanschbereich (326) und einen aufgeweiteten Bereich (327) an der oberen Kante aufweist, wobei das metallische Rohrteil (322) eine Beschichtung aus einem nicht korrosiven und nicht metallischen Materials aufweist, die um die Oberfläche des metallischen Rohrteils (322) ausgebildet und an dieser Oberfläche befestigt ist, wobei das metallische Rohrteil (322) im inneren Ende der metallischen Anschlußmontageeinrichtung (312) montiert ist, wobei der aufgeweitete Endbereich (327) in der inneren Nut (316) der Montageeinrichtung (312) sitzt, wobei der integral mit dem inneren Mantel (341) des Tanks ausgebildete, aus nicht korrosivem und nicht metallischem Material bestehende Vorsprungsbereich (342) mit dem Beschichtungsmaterial auf dem metallischen Rohrteil (322) verschmolzen ist, um einen Kontakt zwischen den Inhaltsstoffen des Tanks und dem äußeren Mantel (332) des Tanks zu verhindern.

5. Tankanschlußkonstruktion zum Verbinden des Inneren mit dem Äußeren eines Tanks, der einen äußeren Mantel (164) eines metallischen Materials und einen irreren Mantel (168) aus einem nicht korrosiven und nicht metallischen Material aufweist, der innerhalb des äußeren Mantels (164) montiert ist, wobei der Anschluß umfaßt:
eine metallische Anschlußmontageeinrichtung (142) mit einem mit Innengewinde versehenen Körperbereich (144), einer inneren Nut (146) und einem Schweißvorsprungsbereich (148) an seiner inneren Seite zum Anschweißen an den äußeren Mantel (164);
ein metallisches Rohrteil (150) mit einem zylindrischen Körperbereich (152) und einem Flanschbereich (154), wobei das metallische Rohrteil (150) im inneren Ende der metallischen Anschlußmontageeinrichtung (142) montiert ist, wobei der Flansch (154) des Rohrs in der inneren Nut (146) der Montageeinrichtung (142) sitzt; und
ein Rückhalteringteil (156), das in der inneren Nut (146) der metallischen Anschlußmontageeinrichtung (142) montiert ist, um das metallene Rohrteil (150) sicher an seinem Platz zu halten;
wobei der zylindrische Körperbereich (152) des metallischen Rohrteils (150) eine äußere Oberfläche zum Anbringen an einem Vorsprungsbereich (167) aus nicht korrosivem und nicht metallischen Material aufweist, die integral mit dem inneren Mantel (168) des Tanks ausgebildet ist, um einen Kontakt zwischen den Inhaltsstoffen des Tanks und dem äußeren Mantel (164) des Tanks zu verhindern.

6. Tankanschlußkonstruktion nach einem der Ansprüche 1 bis 5 mit einer Pfropfeneinrichtung (30, 36, 62, 68, 96, 124, 130, 141, 147, 194, 214, 240, 242, 300, 302, 336, 350, 358), die innerhalb des mit Innengewinde versehenen Körperbereichs (12, 48, 78, 106, 144, 172, 202, 228, 286, 314) aufgenommen ist und ein Teil (36, 68, 96, 130, 147, 194, 214, 242, 302, 358) aus einem Material mit einer niedrigen Wärmeleitfähigkeit enthält.

7. Tankanschlußkonstruktion zum Verbinden des Inneren mit dem Äußeren eines Tanks, der einen mit einer Öffnung (270) versehenen äußeren Mantel (272) eines metallischen Materials und einen inneren Mantel (280) aus einem nicht korrosiven und nicht metallischen Material aufweist, der innerhalb des äußeren Mantels (272) montiert ist, wobei der Anschluß umfaßt:
eine metallische Anschlußmontageeinrichtung (254) mit einem mit Innengewinde versehenen Körperbereich (256), einen Schweißvorsprungsbereich (260), der an einem Ende des Körperbereichs (256) angeordnet ist, um an den äußeren Mantel (272) des Tanks angeschweißt zu werden, und mit einer Nut (262), die an einem Ende des Körperbereichs (256) angeordnet und in Richtung auf das andere Ende des Körperbereichs (56) offen ist,
ein Ringteil (264), das in der äußeren Nut (262) in der metallischen Anschlußmontageeinrichtung (254) sitzt, um die Montageeinrichtung (254) im äußeren Mantel (272) zu zentrieren, und
eine mit Gewinde versehene Pfropfeneinrichtung (276, 278), die in dem mit Innengewinde versehenen Körperbereich aufgenommen ist und sich aus dem einen Ende des Körperbereichs (256) herauserstreckt, um einen Gewindebereich (282) aus nicht korrosivem und nicht metallischem Material zu bilden, der integral mit dem inneren Mantel (280) ist, wobei der Gewindebereich (282) eine Fortsetzung des mit Innengewinde versehenen Körperbereichs (256) der metallischen Anschlußmontageeinrichtung (254) bildet.

8. Tankanschlußkonstruktion nach Anspruch 6 oder 7, wobei die Pfropfeneinrichtung einen Pfropfen (350) und eine Kappe (358) aufweist, wobei der Pfropfen und die Kappe eine sich durch sie hindurch erstreckende, zentrale Öffnung (350, 364) hat, wobei ein Pfropfen (366) aus porösem Material in der zentralen Öffnung (364) angeordnet ist.

9. Tank mit einem äußeren Mantel (26, 60, 92, 120, 164, 190, 218, 246, 272, 294, 323) aus einem metallischen Material oder einem inneren Mantel (44, 73, 102, 138, 168, 196, 224, 150, 280, 306, 341) aus nicht korrosivem und nicht metallischem Material, **gekennzeichnet durch** eine Tankanschlußkonstruktion nach einem der Ansprüche 1 bis 8.

10. Tank nach Anspruch 9, wobei der Schweißvorsprung (16, 52, 84, 110, 178, 206, 232, 290, 320) der Anschlußmontageeinrichtung (10, 46, 76, 104, 170, 120, 226, 284, 312) durch ein Widerstandsschweißverfahren am äußeren Mantel (26, 60, 92, 120, 190, 218, 246, 294, 232) angeschweißt ist.

11. Tank nach Anspruch 9 oder 10, wobei die Hülseneinrichtung (18, 54, 86, 112, 180, 208, 234, 292, 328) zum Zentrieren der Anschlußmontageeinrichtung in einer Öffnung (24, 59, 91, 118, 188, 216, 245, 296, 330) im äußeren Tankmantel dient.

12. Tank nach Anspruch 2 und 9, wobei das Ende des Vorsprungsbereichs (103) in der zweiten ringförmigen Nut (80) sitzt.

13. Tank nach einem der Ansprüche 9 bis 12, wobei der Vorsprungsbereich (43, 74, 140, 252, 308) aus nicht korrosivem und nicht metallischem Material einen Gewindebereich aufweist, der eine Fortsetzung des Innengewinde-Körperbereichs (12, 48, 106, 228, 286) der metallischen Anschlußmontageeinrichtung (10, 46, 104, 226, 284) bildet.

14. Tank nach einem der Ansprüche 9 bis 13, wobei die Hülsenteileinrichtung (86, 180) einen gekrümmten inneren Körperbereich (88, 184) aufweist, an dem der Vorsprungsbereich (103, 198) angeschweißt ist.

15. Verfähren zum Herstellen eines Tanks mit einer Tankanschlußkonstruktion, die am Tank zur Verbindung des Inneren des Tanks mit dem Äußeren des Tanks montiert ist, mit den folgenden Schritten:
**a)** Herstellen eines äußeren Mantelteils (26, 60, 92, 120, 190, 218, 246, 294, 323) aus einem metallischen Material;
**b)** Zusammenfügen einer metallischen Anschlußmontageeinrichtung (10, 46, 76, 104, 170, 200, 226, 284, 312) mit einer Hülsenteileinrichtung (18, 54, 86, 112, 180, 208, 234, 292, 328) aus einem nicht korrosivem und nicht metallischem Material, wobei die metallische Anschlußmontageeinrichtung einen mit Innengewinde versehenen Körperbereich (12, 48, 78, 106, 172, 202, 228, 286, 314), eine innere Nut (14, 50, 80, 82, 108, 174, 176, 204, 230, 288, 316, 318) und einen Schweißvorsprungsbereich (14, 52, 84, 110, 178, 206, 232, 290, 320) aufweist, wobei die Hülsenteileinrichtung in der inneren Nut der Anschlußmontageeinrichtung angeordnet ist, um eine Einheit zu bilden;
**c)** Anordnen der Einheit des Verfahrensschrittes (b) auf der Oberfläche des äußeren Tankmantels, wobei die Hülseneinrichtung mit einer Öffnung (24, 59, 91, 118, 188, 216, 245, 296, 330) im äußeren Mantel ausgerichtet ist;
**d)** Verschweißen des Schweißbereichs der Anschlußmontageeinrichtung mit dem äußeren Mantel;
**e)** Herstellen eines inneren Mantels (44 , 73, 102, 138, 196, 224, 250, 306, 341) aus einem nicht korrosiven und nicht metallischen Material im Inneren des äußeren Mantels, wobei ein Bereich (43, 74, 103, 140, 198, 225, 252, 308, 342) des inneren Mantels, der um die Anschlußmontageeinrichtung gebildet wurde, mit dem nicht korrosiven und nicht metallischen Material der Hülseneinrichtung verschmolzen wird.

16. Verfahren nach Anspruch 15, wobei zwischen die Verfahrensschritte (b) und (e) der folgende Verfahrensschritt eingefügt ist:
Anordnen einer Pfropfeneinrichtung (30, 36, 62, 68, 96, 124, 130, 194, 214, 240, 242, 300, 302, 336, 350, 358) im mit Gewinde versehenen Körper (12, 48, 78, 106, 172, 202, 228, 286, 314) der metallischen Anschlußmontageeinrichtung (10, 46, 76, 104, 170, 200, 226, 284, 312), wobei die Pfropfeneinrichtung das Material des inneren Mantels am Austreten durch die metallische Anschlußmontageeinrichtung während des Verfahrensschrittes (e) hindert.

17. Verfähren nach Anspruch 15 oder 16, wobei der innere Mantel (44, 73, 102, 138, 196, 224, 250, 306, 341) durch ein Rotationsgießverfahren gebildet wird.

## Revendications

1. Structure de raccord pour réservoir pour raccorder l'intérieur à l'extérieur d'un réservoir constitué d'une enveloppe extérieure (26, 60, 92, 120, 190, 218, 246, 294, 332) métallique et d'une paroi intérieure (44, 73, 102, 138, 196, 224, 250, 306, 341) constituée d'un matériau inoxydable (116, 224, 250) et non métallique, ledit raccord comprenant:
un moyen de montage de raccord métallique (10, 46, 76, 104, 170, 200, 226, 284, 312) ayant une partie de corps filetée intérieurement (12, 48, 78, 106, 172, 202, 228, 286, 314); une gorge intérieure (14, 50, 80, 82, 108, 174, 176, 204, 230, 288, 316, 318) et une partie formant protubérance à souder (16, 52, 84, 110, 178, 206, 232, 290, 320) sur son extrémité intérieure devant être soudée à l'enveloppe extérieure métallique du réservoir;
un moyen à manchon (18, 54, 86, 112, 180, 208, 234, 292, 328) en matériau inoxydable et non métallique prenant appui dans ladite gorge intérieure dans ledit moyen de montage de raccord; pour être fusionné en une partie formant prolongement (43, 74, 103, 140, 198, 225, 252, 308, 342) en matériau inoxydable et non métallique solidaire de l'enveloppe intérieure du réservoir afin d'empêcher tout contact entre le contenu du réservoir et l'enveloppe extérieure du réservoir.

2. Structure de raccord pour réservoir selon la revendition 1, dans laquelle ledit matériau inoxydable et non métallique dudit moyen formant manchon (18, 54, 86, 112, 180, 208, 234, 292, 328) et ladite partie prolongée (43, 74, 103, 140, 198, 225, 252, 308, 342) est un matériau polymère.

3. Structure de raccord pour réservoir selon la revendication 1 ou 2, dans laquelle ledit moyen de montage pour raccord métallique (76, 170, 312) comporte une deuxième gorge intérieure (80, 174, 316) à son extrémité extérieure.

4. Structure de raccord pour réservoir selon l'une quelconque des revendication 1 à 3, dans lequel ledit moyen formant manchon (328) comporte un élément tubulaire métallique (322) ayant une partie formant corps cylindrique (324), une partie formant bride inférieure (326) et une partie formant bord supérieur évasé (327), ledit élément tubulaire métallique (322) ayant un revêtement de matériau inoxydable et non métallique formé autour de la surface dudit élément tubulaire métallique (322) et y adhèrent, ledit élément tubulaire métallique (322) étant monté dans l'extrémité intérieure dudit moyen de montage de raccord métallique (312) de telle manière que ladite partie d'extrémité évasée (327) prenne appui dans ladite gorge intérieure (316) dudit moyen de montage (312); ladite partie formant prolongement (342) en matériau inoxydable et non métallique réalisée de façon solidaire de ladite enveloppe intérieure (341) du réservoir, étant fusionnée avec ledit matériau de revêtement sur ledit élément tubulaire métallique (322) pour empêcher tout contact entre le contenu du réservoir et l'enveloppe extérieure (332) du réservoir.

5. Structure de raccord pour réservoir pour raccorder l'intérieur à l'extérieur d'un réservoir, qui est constituée d'une enveloppe extérieure (164) en matériau métallique; et d'une enveloppe intérieure (168) en matériau inoxydable et non métallique montée à l'intérieur de ladite enveloppe extérieure (164);
ledit raccord comprenant: un moyen de montage de raccord métallique (142) ayant une partie formant corps fileté intérieurement (144), une gorge intérieure (146) et une partie formant protubérance à souder (148) sur son extrémité intérieure devant être soudée à ladite enveloppe extérieure (164);
un élément tubulaire métallique (150) ayant une partie formant corps cylindrique (152) et une partie formant bride (154), ledit élément tubulaire métallique (150) étant monté dans ladite extrémité intérieure dudit moyen de montage pour raccord métallique (142) de telle manière que ladite bride de tube (154) prenne appui dans ladite gorge intérieure (146) dudit moyen de montage (142); et
un élément formant bague de retenue (156) monté dans ladite gorge intérieure (146) dudit moyen de montage pour raccord métallique (142) afin de maintenir solidement en place ledit élément tubulaire métallique (150);
la partie formant corps cylindrique (152) dudit élément tubulaire métallique (150) ayant une surface extérieure destinée à adhérer à une partie formant prolongement en matériau inoxydable et non métallique réalisée de façon solidaire de ladite enveloppe intérieure (168) du réservoir pour empêcher tout contact entre le contenu du réservoir et l'enveloppe extérieure (164) du réservoir.

6. Structure de raccord pour réservoir selon l'une quelconque des revendications 1 à 5, comprenant un moyen formant bouchon (30, 36, 62, 68, 96, 124, 130, 141, 147, 194, 214, 240, 242, 300, 302, 336, 350, 358) reçu à l'intérieur de ladite partie formant corps fileté intérieurement (12, 48, 78, 106, 144, 172, 202, 228, 286, 314) et comportant une pièce (36, 68, 96, 130, 147, 194, 214, 242, 302, 358) constituée d'un matériau à faible conductivité thermique.

7. Structure de raccord pour réservoir pour raccorder l'intérieur à l'extérieur d'un réservoir constitué d'une enveloppe extérieure (272) en matériau métallique ayant une ouverture (270) dans celui-ci et une enveloppe intérieure (280) en matériau inoxydable et non métallique montée à l'intérieur de ladite enveloppe extérieure (272), ledit raccord comprenant:
un moyen de montage pour raccord métallique (254) ayant une partie formant corps fileté intérieurement (256), une partie formant protubérance à souder (260) à une extrémité de ladite partie formant corps (256), devant être soudée à l'enveloppe extérieure (272) dudit réservoir et une gorge (262) disposée à ladite extrémité de ladite partie formant corps (256) et s'ouvrant vers l'autre extrémité de ladite partie formant corps (256); une bague (264) prenant appui dans ladite gorge extérieure (262) dans ledit moyen de montage pour raccord métallique (254) afin de centrer ledit moyen de montage (254) dans ladite enveloppe extérieure (272); et
un moyen formant bouchon fileté (276, 278) reçu dans ladite partie formant corps fileté intérieurement et se prolongeant à l'extérieur de ladite extrémité de ladite partie formant corps (256) pour former une partie filetée (282) constituée d'un matériau inoxydable et non métallique solidaire de ladite enveloppe intérieure (280), ladite partie filetée (282) formant un prolongement dudit corps fileté intérieurement (256) dudit moyen de montage pour raccord métallique (254).

8. Structure de raccord pour réservoir selon la revendication 6 ou 7, dans laquelle ledit moyen formant bouchon comporte un bouchon (350) et un capuchon (358), ledit bouchon et ledit capuchon ayant un orifice central (350, 364) les traversant, un bouchon (366) constitué d'un matériau poreux étant monté dans ledit orifice central (364).

9. Réservoir ayant une enveloppe extérieure (26, 60, 92, 120, 164, 190, 218, 246, 272, 294, 332) en matériau métallique et une enveloppe intérieure (44, 73, 102, 138, 168, 196, 224, 250, 280, 306, 341) en matériau inoxydable et non métallique, caractérisé par:
une structure de raccord pour réservoir selon l'une quelconque des revendications 1 à 8.

10. Réservoir selon la revendication 9, dans lequel ladite protubérance à souder (16, 52, 84, 110, 178, 206, 232, 290, 320) dudit moyen de montage de raccord (10, 46, 76, 104, 170, 200, 226, 284, 312) est soudée à l'enveloppe extérieure (26, 60, 92, 120, 190, 218, 246, 294, 332) par un procédé de soudage à résistance.

11. Réservoir selon la revendication 9 ou 10 dans lequel ledit moyen à manchon (18, 54, 86, 112, 180, 208, 234, 292, 328) sert à centrer ledit moyen de montage de raccord dans un orifice (24, 59, 91, 118, 188, 216, 245, 296, 330) formé dans ladite enveloppe extérieure du réservoir.

12. Réservoir selon les revendications 2 et 9 dans lequel l'extrémité de ladite partie formant prolongement (103) prend appui dans ladite deuxième gorge annulaire (80).

13. Réservoir selon l'une quelconque des revendications 9 à 12, dans lequel ladite partie formant prolongement (43, 74, 140, 252, 308) en matériau inoxydable et non métallique présente une partie filetée qui forme un prolongement du corps fileté intérieurement (12, 48, 106, 228, 286) dudit moyen de montage pour raccord métallique (10, 46, 104, 226, 284).

14. Réservoir selon l'une quelconque des revendications 9 à 13 dans lequel ledit élément formant manchon (86, 180) présente une partie formant corps intérieur incurvé (88, 184) à laquelle est fusionnée la partie formant prolongement (103, 198).

15. Procédé de fabrication d'un réservoir ayant une structure de raccord montée à l'intérieur de celui-ci pour raccorder l'intérieur du réservoir à l'extérieur du réservoir, comprenant les étapes suivantes:
a. réaliser un élément formant enveloppe extérieure (26, 60, 92, 120, 190, 218, 246, 294, 332) en matériau métallique;
b. assembler un moyen de montage pour raccord métallique (10, 46, 76, 104, 170, 200, 226, 284, 312) avec un élément à manchon (18, 54, 86, 112, 180, 208, 234, 292, 328) en matériau inoxydable et non métallique, ledit moyen de montage pour raccord métallique ayant une partie formant corps fileté intérieurement (12, 48, 78, 106, 172, 202, 228, 286, 314), une gorge intérieure (14, 50, 80, 82, 108, 174, 176, 204, 230, 288, 316, 318) et une partie formant protubérance à souder (16, 52, 84, 110, 178, 206, 232, 290, 320), ledit élément formant manchon étant monté dans la gorge intérieure du moyen de montage de raccord pour former un assemblage;
c. positionner l'assemblage de l'étape (b) sur la surface de l'enveloppe extérieure du réservoir de telle manière que le manchon soit aligné avec un orifice (24, 59, 91, 118, 188, 216, 245, 296, 330) ménagé dans l'enveloppe extérieure;
d. souder la partie à souder dudit moyen de montage de raccord sur l'enveloppe extérieure;
e. former une enveloppe intérieure (44, 73, 102, 138, 196, 224, 250, 306, 341) en matériau inoxydable et non métallique à l'intérieur de l'enveloppe extérieure avec une partie (43, 74, 103, 140, 198, 225, 252, 308, 343) de ladite enveloppe intérieure formée autour dudit moyen de montage de raccord qui se fusionne alors au matériau inoxydable et non métallique dudit moyen formant manchon.

16. Procédé selon la revendication 15, dans lequel l'étape suivante est effectuée entre les étapes (b) et (e):
installer un moyen formant bouchon (30, 36, 62, 68, 96, 124, 130, 194, 214, 240, 242, 300, 302, 336, 350, 358) dans le corps fileté (12, 48, 78, 106, 172, 202, 228, 286, 314) du moyen de montage pour raccord métallique (10, 46, 76, 104, 170, 200, 226, 284, 312), ledit moyen formant bouchon servant à empêcher le matériau de ladite enveloppe intérieure de sortir par le moyen de montage pour raccord métallique pendant l'étape (e).

17. Procédé selon la revendication 15 ou 16, dans lequel ladite enveloppe intérieure (44, 73, 102, 138, 196, 224, 250, 306, 341) est formée par un procédé de coulée rotative.
